# EUROPÄISCHE PATENTSCHRIFT

(11) **EP 0 779 855 B1**
(45) Veröffentlichungstag und Bekanntmachung des Hinweises auf die Patenterteilung: **10.06.1998**
(21) Anmeldenummer: 95932711.5
(22) Anmeldetag: 11.09.1995
(51) Int. Cl.: B29C 67/24, B28B 21/06, B28B 21/82, F16L 9/08

(54) **VERFAHREN UND VORRICHTUNG ZUR HERSTELLUNG VON ROHREN ODER ROHRÄHNLICHEN FORMKÖRPERN AUS POLYMERBETON**
METHOD AND DEVICE FOR PRODUCING PIPES OR TUBULAR MOULDED BODIES FROM POLYMER CONCRETE
PROCEDE ET DISPOSITIF DE FABRICATION DE TUYAUX OU DE CORPS MOULES TUBULAIRES EN BETON AU POLYMERE

(30) Priorität: 10.09.1994 DE 4432333
(43) Veröffentlichungstag der Anmeldung: 25.06.1997
(73) Patentinhaber: ILOMA AUTOMATISIERUNGSTECHNIK GmbH, D-49086 Osnabrück (DE)
(72) Erfinder: Brokmann, Manfred, 49086 Osnabrück (DE)
(74) Vertreter: Busse & Busse Patentanwälte
(86) Internationale Anmeldenummer: EP9503570
(87) Internationale Veröffentlichungsnummer: WO9607531

(56) Entgegenhaltungen:
- CH-A- 640 456
- DE-A- 2 412 192
- DE-A- 4 339 118
- DE-C- 174 057
- DE-C- 849 064
- FR-A- 635 706
- FR-A- 1 581 741
- FR-A- 2 110 749
- FR-A- 2 203 311
- US-A- 2 282 282
- US-A- 2 644 218
- US-A- 2 789 334
- US-A- 4 685 873
- Prospekt ÖKO-FILTER der Lausitzer Braunkohle Aktiengesellschaft.

## Beschreibung

Die Erfindung bezieht sich auf ein Verfahren und auf eine Vorrichtung zur Herstellung von Rohren oder rohrähnlichen Formkörpern aus Polymerbeton. Die Erfindung bezieht sich ferner auf ein Muffenrohr aus Polymerbeton.

Zur Herstellung von Rohren aus Polymerbeton finden in der Praxis (Prospekt "ÖKO-FILTER" der Lausitzer Braunkohle AG) Formvorrichtungen Verwendung, die einen Formkern und einen Formmantel umfassen, die gemeinsam einen Formraum umgrenzen. Der Formraum der mit ihrer Hauptachse vertikal ausgerichteten Formvorrichtung wird mittels einer Füllvorrichtung mit Mineralgußmasse befüllt und diese anschließend als Ganzes gerüttelt. Einige Zeit nach Abschluß des Rüttelvorganges beginnt die Mineralgußmasse, die sich auf Umgebungstemperatur befindet, auszuhärten, und nach weitgehendem Abschluß des Aushärtevorgangs wird der Formkörper aus der Formvorrichtung ausgeschalt. Da während des Aushärtens das Rohr schrumpft und bei dem langsamen Ablauf des Härtungsprozesses das Rohr nicht vor dem Auftreten eines erheblichen Schrumpfens ausgeschalt werden kann, muß auf den Formkern ein hülsenförmiger Ausgleichskörper aufgesetzt werden, der dann als Liner das fertige Rohr auskleidet.

Bei einem Verfahren gemäß einem älteren Vorschlag (P 43 39 118.4) wird der Formkörper entlang seiner Mittelachse abschnittsweise durch Füllen von aufeinanderfolgenden Längsabschnitten des Formraums der Formvorrichtung mit Mineralgußmasse und Rütteln der Mineralgußmasse im Befüllungsbereich aufgebaut und phasenversetzt in gleicher Richtung abschnittsweise ausgehärtet. Die Formvorrichtung weist hierbei einen Formmantel aus übereinander geordneten umsetzbaren Mantelsegmenten auf, deren Segmentteile jeweils aus einer ringförmig geschlossenen Betriebsstellung in eine Außerbetriebstellung auseinanderbewegbar und in dieser umsetzbar sind. Der Formkern ist dabei in axial begrenzte Abschnitte unterteilt, die unterschiedliche Behandlungszonen bilden, wobei Formmantel und Formkern bei der Herstellung eines Formkörpers relativ zueinander axial bewegbar sind.

Die Erfindung befaßt sich mit dem Problem, ein Verfahren und eine Vorrichtung zur Herstellung von Formkörpern, insbesondere einem Muffenrohr, aus Polymerbeton zu schaffen, die mit geringem Betriebs- und Bauaufwand eine schnelle Herstellung von rohrförmigen Formkörpern aus Polymerbeton ermöglichen.

Das Verfahren nach der Erfindung löst das Problem durch ein Verfahren mit den Merkmalen des Anspruchs 1 und eine Vorrichtung mit den Merkmalen des Anspruchs 13. Weitere Ausgestaltungen des Verfahrens ergeben sich aus den Ansprüchen 2 bis 12 und der Vorrichtung aus den Ansprüchen 14 bis 50.

Die Erfindung ermöglicht eine Herstellung von Rohren und rohrähnlichen Formkörpern mit kontinuierlicher oder quasi kontinuierlicher Bildung des Formkörpers in einem zumindest im Hauptteil ortsfesten Formraum, der von der Gutsäule aus Mineralgußmasse durchlaufen und dabei geformt, verdichtet und ausgehärtet wird. Der Bauaufwand für die Formvorrichtung ist dabei überaus gering, so daß sich günstige Betriebsabläufe sowie einfache Umrüstmöglichkeiten für eine Herstellung von Formkörpern unterschiedlicher Abmessungen ergeben.

Zur Herstellung von Tonröhren ist eine Vorrichtung bekannt, deren Formvorrichtung eine vertikale Längsmittelachse, einen Formkern und einen Formmantel mit einem Formraum zwischen diesen aufweist. Formkern und Formmantel begrenzen den Muffenbereich des Tonrohrs, wobei der Formkern zugleich ein den Formraum unterseitig abschließendes Verschlußglied bildet. Zur Bildung des Muffenbereichs des Tonrohrs wird der Formraum durch einen Preßkolben mit Tonmasse gefüllt, wonach der Formkern mittels eines Tisches axial abgesenkt und dabei durch Ausdrücken von Tonmasse durch einen Ringspalt der zylindrische Teil des Tonrohres gebildet wird. Eine ähnliche Vorrichtung ist aus der FR-A- 635 706 zur Herstellung von Steingut-Rohrkörpern bekannt, bei der nach Strangpressen des zylindrischen Teils ein Abtrennen durch einen Drahtschneider folgt. Bei einer aus der US-A-2,789,334 bekannten Strangpreßvorrichtung zur Herstellung von Tonrohren ist dem Kernteil des Mundstücks eine um die Extrusionsachse rotierbares Schneidmesser vorgesehen, das aus einer Ausgangsstellung innerhalb des stranggepreßten Tonrohrs radial auswärts in eine Schneidstellung bewegbar ist und bei einer Rotationsbewegung das Tonrohr abtrennt. Mit den vorgenannten Vorrichtungen hergestellte Tonrohre durchlaufen nach ihrer Formgebung einen Trockner und einen Brennofen zum Zwecke ihrer Aushärtung.

Weitere Vorteile und Einzelheiten der Erfindung ergeben sich aus der nachfolgenden Beschreibung und der Zeichnung, in der zwei Ausführungsbeispiele einer Formvorrichtung nach der Erfindung schematisch veranschaulicht ist. In der Zeichnung zeigen:
- Fig. 1: eine Seitenansicht einer ersten Ausführung der Formvorrichtung nach der Erfindung, teilweise im Schnitt, in einer Grundstellung vor Beginn des Herstellungsvorganges,
- Fig. 2: eine Seitenansicht, halbseitig im Schnitt, ähnlich Fig. 1 zur Veranschaulichung der Teile in einer Anfangsphase der Formkörperherstellung,
- Fig. 3: eine Seitenansicht ähnlich Fig. 1 zur Veranschaulichung der Teile nach Abschluß der Herstellung eines Formkörpers,
- Fig. 4: einen abgebrochenen Längsteilschnitt durch einen Längenbereich des Oberteils des Formmantels,
- Fig. 5: einen Schnitt nach der Linie V-V in Fig. 4,
- Fig. 6: einen abgebrochenen Längsteilschnitt ähnlich Fig. 4 durch das untere Ende des Formraums,
- Fig. 7: eine schematische Draufsicht auf das Verschlußteil mit Formsegmenten als Muffeninnenformteil,
- Fig. 8: eine Darstellung einer weiteren Ausführung der Formvorvorrichtung nach der Erfindung,
- Fig. 9: eine Ausschnittvergrößerung zu Fig. 8 mit einem Verschlußkörper in einer Ausgangsstellung zu Beginn eines Herstellungsvorganges,
- Fig. 10: eine Darstellung ähnlich Fig. 8 zur Veranschaulichung der Formvorrichtung in einer späteren Betriebsphase,
- Fig. 11: eine vergrößerte Ausschnittdarstellung der Formvorrichtung nach Fig. 8 zur Veranschaulichung von Stellungen des in Bildung befindlichen Formkörpers beim Durchtrennen der Folienvorhänge, beim Einführen der Zwischenstützglieder und nach Übernahme der Abstützung durch diese,
- Fig. 12: eine Darstellung ähnlich Fig. 11 zur Veranschaulichung von Stellungen der in Bildung befindlichen Formkörper in nachfolgenden Phasen des fortlaufenden Herstellungsvorganges,
- Fig. 13 und 14: vergrößerte Ausschnittdarstellungen der Formvorrichtung nach Fig. 8 zur näheren schematischen Veranschaulichung des Innenwerkzeugs der Folientrennvorrichtung in zwei zueinander orthogonalen Blickrichtungen,
- Fig. 15 und 16: Darstellungen ähnlich Fig. 13 und 14 zur Veranschaulichung des Außenwerkzeugs der Folientrennvorrichtung und deren Abstützung sowie der Abstützung der Zwischenstützglieder,
- Fig. 17: einen Schnitt nach der Linie XVII-XVII in Fig. 15,
- Fig. 18: eine Darstellung ähnlich Fig. 12 zur Veranschaulichung der Stellung eines fertiggestellten Formkörpers unmittelbar vor dessen Austrag aus der Formvorrichtung, und
- Fig. 19: eine schematische Draufsicht auf eine Austragvorrichtung für fertiggestellte Formkörper.

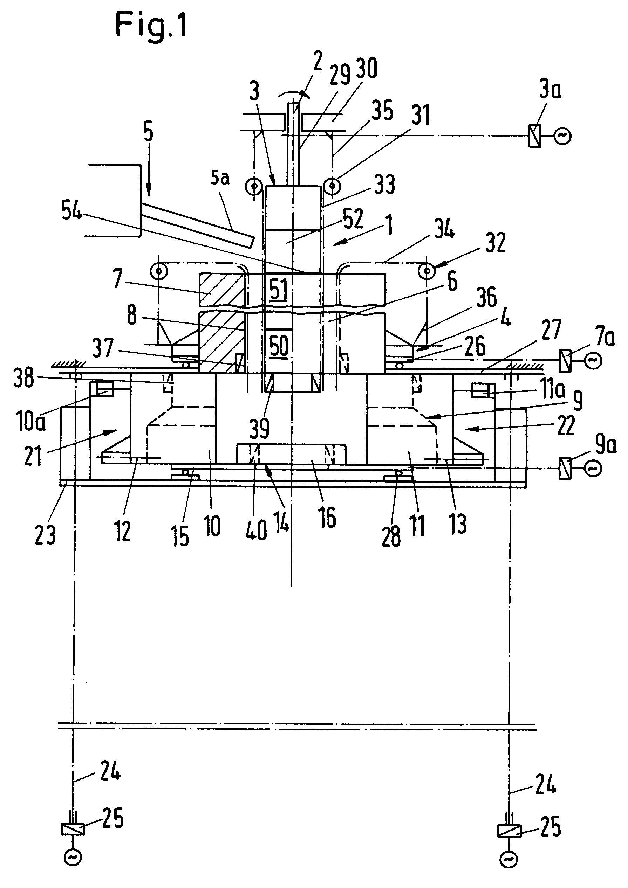

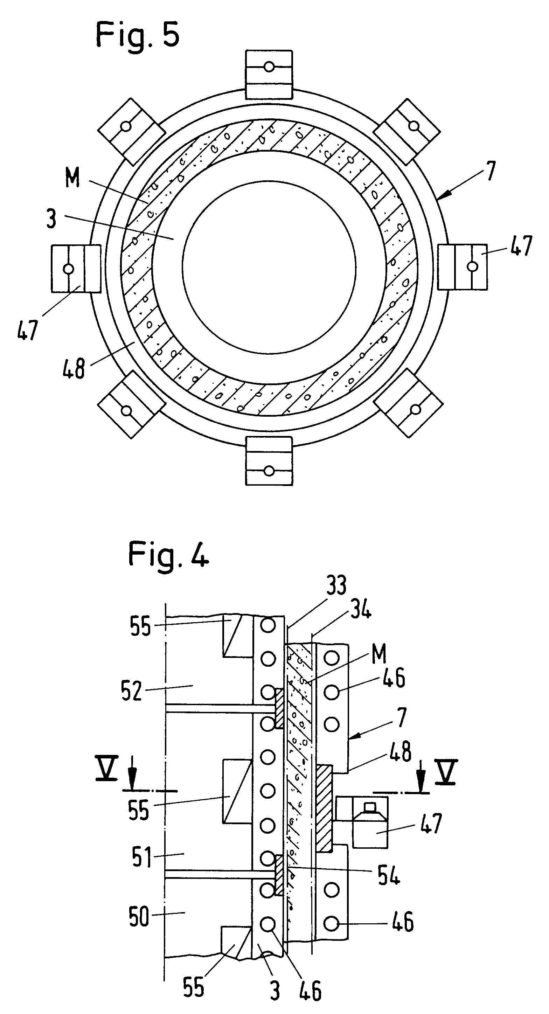

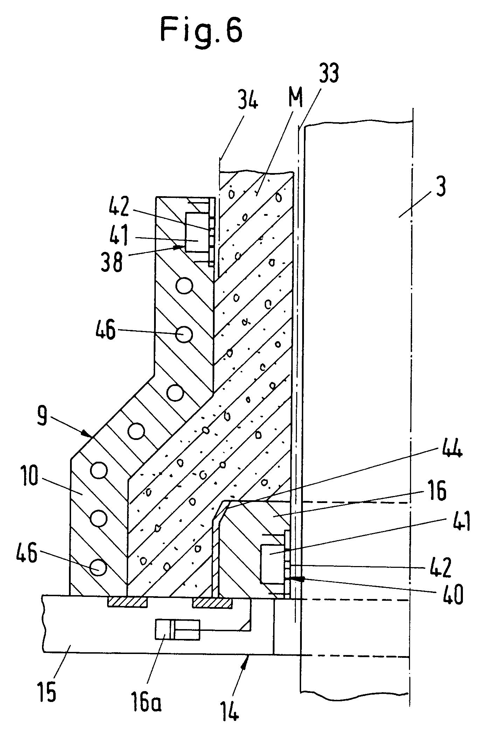

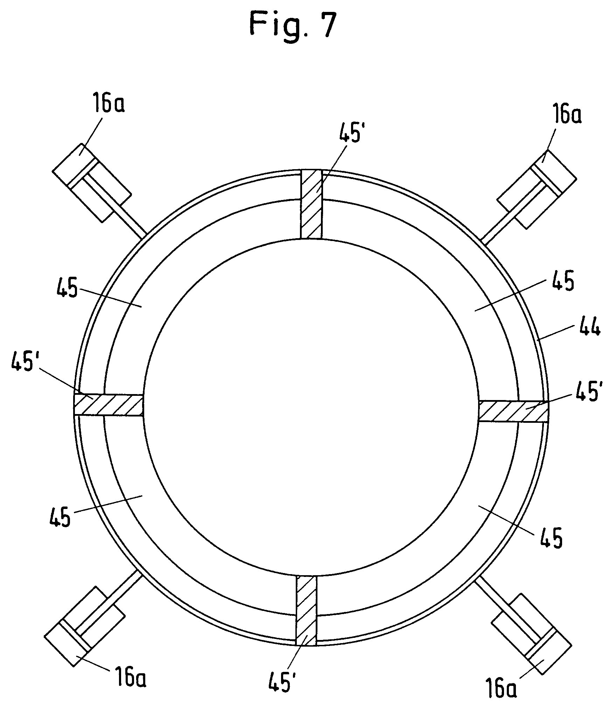

Die in Fig. 1 bis 7 veranschaulichte Vorrichtung ist zur Herstellung von Muffenrohren M vorgesehen und umfaßt im einzelnen eine Formvorrichtung 1 mit vertikaler Längsmittelachse 2, die einen Formkern 3 und einen Formmantel 4 sowie eine Füllvorrichtung 5 für die Zufuhr von Mineralgußmasse in einen zwischen Formkern 3 und Formmantel 4 ausgebildeten Formraum 6 aufweist.

Der Formmantel 4 umfaßt ein in vertikaler Richtung ortsfestes Teil 7, dessen Innenwand 8 den Formraum 6 außenseitig begrenzt und bevorzugt zylindrisch ausgeführt ist. Das Teil 7 kann zu Wartungszwecken teilbar oder zerlegbar sein, bildet im Betrieb der Vorrichtung jedoch eine geschlossene Baueinheit. Die axiale Länge des Teils 7 entspricht einem Bruchteil eines herzustellenden Rohres und kann beispielsweise das Maß von 120 cm haben.

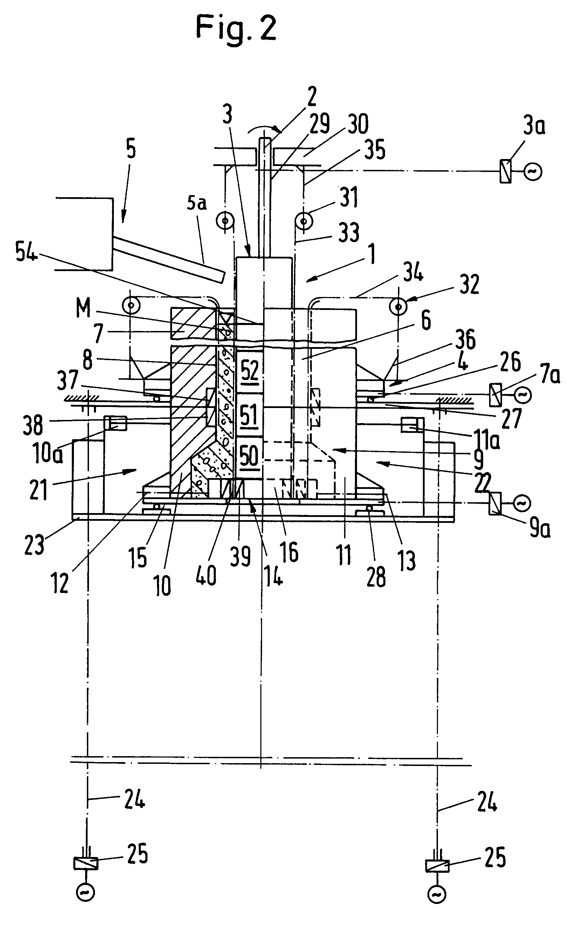

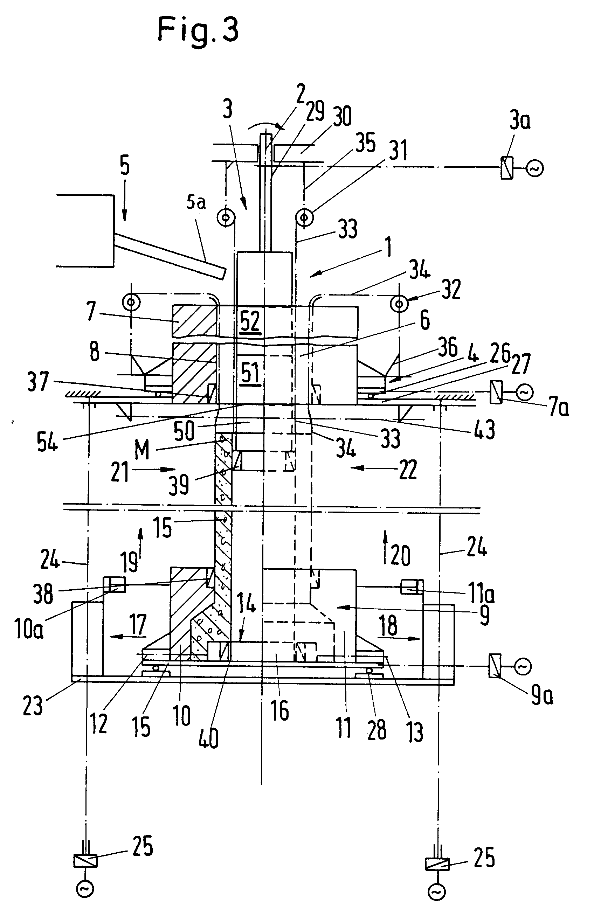

Das Teil 7 bildet bei dem dargestellten Ausführungsbeispiel das Oberteil des Formmantels 4, der in einer senkrecht zur Längsmittelachse 2 verlaufenden Ebene in zwei Teile 7,9 unterteilt ist, von denen das Unterteil 9 den Formraum 6 im Bereich des Muffenteils eines herzustellenden Muffenrohres M umgrenzt und in der axialen Länge im wesentlichen auf die axiale Länge des Muffenbereiches beschränkt sein kann. Das Unterteil 9 ist in einer axial verlaufenden Ebene in zwei Halbteile 10,11 unterteilt, die mittels Antrieben 10a,11a entlang von schematisch angedeuteten Führungen 12,13 gegenläufig horizontal aus einer geschlossenen Betriebsstellung (Fig. 2 und 3) in eine geöffnete Entformungsstellung (Fig. 1) bewegbar sind.

Zum unteren Abschluß des Formraumes 6 ist ein Verschlußteil 14 vorgesehen, das aus einer oberen Ausgangsstellung (Fig. 1 und 2) in eine untere Endstellung um ein Wegstück absenkbar ist, das im wesentlichen der Sollänge eines herzustellenden Formkörpers, hier des Muffenrohres M, entspricht. Im einzelnen umfaßt das Verschlußteil 14 eine ringförmige Trägerplatte 15 und ein Muffeninnenformteil 16, das auf der Trägerplatte 15 abgestützt ist.

Das Unterteil 9 des Formmantels 4 stützt sich auf der Trägerplatte 15 des Verschlußteils 14 ab und ist mit diesem aus dessen oberen Ausgangsstellung in dessen untere Endstellung absenkbar, wie dies die Fig. 3 veranschaulicht. In der unteren Endstellung des Verschlußteils 14 sind die Halbteile 10,11 des Unterteils 9 des Formmantels 4 in die Entformungsstellung überführbar, wie dies die Pfeile 17,18 versinnbildlichen, und in dieser Entformungsstellung zusammen mit dem Verschlußteil 14 in eine Zwischenstellung (Fig. 1) in Höhe ihrer Betriebsstellung unmittelbar unterhalb des Oberteils 7 anhebbar, wie das die Pfeile 19,20 andeuten. Aus der Zwischenstellung sind dann die Halbteile 10,11 horizontal gegenläufig einwärts in die Betriebsstellung (Fig. 2) bewegbar (Pfeile 21,22). Zu diesem Zweck stützt sich das Verschlußteil 14 auf einem Hubtisch 23 ab, der entlang von Vertikalführungen 24 verschiebbar ist, die als Gewindespindeln ausgebildet und mittels der bei 25 schematisch angedeuteten Antriebe antreibbar sein können.

Bevorzugt sind die den Formraum 6 begrenzenden Teile 3,4,14 der Formvorrichtung 1 als Ganzes um die Längsmittelachse 2 alternierend schwenkbar gelagert, wobei der Schwenkwinkel beispielsweise etwa 300° betragen kann. Der Auslauf 26 der Füllvorrichtung 5 mündet dabei ortsfest im Bereich oberhalb des Formraums 6 aus, der nach oben hin offen ist. Dies sichert eine gleichmäßige Befüllung des Formraumes 6 mit Mineralgußmasse.

Statt dessen ist es aber auch denkbar, die Füllvorrichtung 5 oder deren Auslauf 26, wenn dieser beispielsweise von einem Schlauch gebildet ist, auf einer Kreisbahn derart zu bewegen, daß die Mündung des Auslaufes 26 oberhalb des Formraumes 6 die Längsmittelachse 2 mit einem Zentriwinkel von etwa 300° alternierend umkreist.

Zur Sicherung der Verschwenkbarkeit um die Längsmittelachse 2 ist das Oberteil 7 des Formmantels 4 über eine Lagervorrichtung 26 auf einem ortsfesten ringförmigen Trägertisch 27 und das Verschlußteil 14 des Formmantels mit seiner Lagerplatte 15 über eine Lagervorrichtung 28 auf dem Hubtisch 23 abgestützt, so daß die Teile 7 bzw. 9,14 grundsätzlich unabhängig um die Längsmittelachse 2 schwenken können. Schematisch dargestellte Antriebsvorrichtungen 3a,7a,9a stellen jedoch sicher, daß die Teile 3,7,9 und 14 eine synchrone alternierende Verschwenkung erfahren. Zur Sicherung der Schwenkbewegung des Formkerns 3 ist dieser an einem Zentralführungsglied 29 abgestützt, das im Bereich seines oberen Endes von einer Lagervorrichtung 30 getragen ist.

Dem Formkern 3 und dem Oberteil 7 des Formmantels 4 sind Gruppen von Vorratsrollen 31,32 für Folienbahnen zugeordnet, die den Formraum 6 innen und außen auskleidende Folienvorhänge 33,34 bilden. Die dem Formkern 3 zugeordneten Vorratsrollen 31 sind an einem am Zentralführungsglied 29 für den Formkern 3 abgestützten Trägergestell 35 gelagert, das dementsprechend an der alternierenden Schwenkbewegung von Zentralführungsglied 29 mit Formkern 3 teilnimmt. Die dem Oberteil 7 des Formmantels 4 zugeordneten Vorratsrollen 32 sind an einem am Oberteil 7 abgestützten Trägergestell 36 gelagert und nehmen dementsprechend an der alternierenden Schwenkbewegung des Oberteils 7 des Formmantels 4 teil.

Die von den Vorratsrollen ablaufenden, bevorzugt aus Polyester bestehenden Folienbahnen können beispielsweise eine Breite von 10 cm aufweisen und sich im Folienvorhang 33 bzw. 34 um beispielsweise etwa 10 mm überlappen. Sie können nach Eintritt der gegenseitigen Überlappung und vor dem Einlaufen in den Formraum 6 randseitig untereinander verbunden werden, z.B. durch randseitige Verklebung oder Versiegelung. Statt dessen ist es auch möglich, die Folienvorhänge von jeweils nur zwei Folienbahnen zu bilden oder eine Schlauchfolie zu verwenden und diese aus einem Vorratsbehälter mit einem Schlauchfolienvorrat in Zickzack-Faltung zu entnehmen.

Anstelle einer innen- und außenseitigen Auskleidung des Formraumes 6 durch Folie oder auch zusätzlich dazu ist es möglich, ein Gleitmittel einzusetzen, das beispielsweise aus Abgabeöffnungen im oberen Randbereich der Innenwand des Oberteils 7 und aus Abgabeöffnungen im Formkern 3 in einem Bereich nahe dem oberen Ende des Formraums 6 austreten und die Axialbegrenzungsflächen des Formraums 6 mit einem Film so überziehen kann, daß die Mineralgutmasse oder die Folie die Begrenzungsflächen ohne unmittelbaren Kontakt passiert. Das Gleitmittel kann ein solches sein, das bei vollständiger Aushärtung der Mineralgußmasse dauerhafter Bestandteil der Oberfläche wird, oder eine reine Gleitfunktion erfüllen, wenn es zusätzlich zur Folie eingesetzt wird.

Zur Fixierung der Folienvorhänge 33 und 34 während und zwischen Betriebsvorgängen sind im Bereich des unteren Randes der Innenwand 8 des Oberteils 7, des oberen Randes der Innenwand des Unterteils 9, des unteren Randes der Außenwand des Formkerns 3 und der dem Formkern 3 zugewandten Rückwand des Muffeninnenformteils 16 des Verschlußteils 14 jeweils ringförmige Saughaftbereiche 37,38,39 bzw. 40 vorgesehen. Die Saughaftbereiche 37,38,39,40 werden von an eine Vakuumquelle anschließbaren und entlüftbaren Kammern 41 gebildet, die über Saugöffnungen 42 mit dem Formraum 6 in Verbindung stehen.

Zum Durchtrennen der Folienvorhänge 33,34 in einer Ebene, die in einem vorgegebenen Abstand unterhalb der Unterseite des Oberteils 7 des Formmantels 4 und oberhalb des oberen Endes des fertigen Formkörpers M quer zur Längsmittelachse 2 verläuft, ist eine bei 43 schematisch angedeutete Folientrennvorrichtung (Fig. 3) vorgesehen, die als Trennglied beispielsweise einen beheizbaren Trenndraht aufweisen kann.

Der Muffeninnenformteil 16 des Verschlußteils 14 kann an seinen dem Formraum 6 zugewandten Flächen eine unter Schrumpfdruck nachgiebige Beschichtung 44 tragen, um dem Muffenteil des Muffenrohrs M ein Schrumpfen während der Anwesenheit des Teils 16 zu ermöglichen. Zusätzlich oder statt dessen kann das ringförmige Muffeninnenformteil 16 auch von einer Anzahl von Formsegmenten 45 gebildet sein, die aus ihrer Betriebsstellung radial einwärts auf der Trägerplatte 15 abgestützt sind und beispeilsweise gegen die Wirkung einer Feder eine radial einwärtsgerichtete Verlagerung ausführen können, wenn sie durch Schrumpfdruck der aushärtenden Mineralgutmasse beaufschlagt werden. In der Trägerplatte 15 sind bevorzugt Antriebe 16a vorgesehen, durch die die Formsegmente 45 des Muffeninnenformteils 16 zwischen ihrer Betriebsstellung und einer einwärts verlagerten Entformungsstellung bewegt werden können, in der sie sich außer Eingriff mit dem Muffenteil des Muffenrohres M befinden, auch wenn dieses schrumpft. Um in der Betriebsstellung eine im wesentlichen geschlossene Begrenzungsfläche darzubieten und dennoch die Verlagerung aus der Betriebsstellung in die Entformungsstellung zu ermöglichen, können zwischen den Formsegmenten 45, von denen bevorzugt vier vorgesehen sind, verhältnismäßig breite Trennfugen vorgesehen seien, in denen ein elastisch komprimierbares Dichtungsglied 45' vorgesehen ist.

Der Formmantel 4 ist in ganzer Höhe des Formraums 6 beheizbar und weist hierzu in der Wandung seines Ober- und seines Unterteils 7,9 Heizmittel auf, die beispielsweise auf elektrischem Wege die Beheizung ausführen. Die Beheizung kann auch durch ein flüssiges oder gasförmiges Heizmedium erfolgen, das durch Heizkanäle 46 im Ober- und Unterteil 7,9 des Formmantels 4 hindurchführbar ist. Entsprechende Heizmittel sind auch im Formkern 3 vorgesehen, und zwar im Bereich einer Heizzone, die sich wie beim Formmantel 4 praktisch über die Höhe des gesamten Formraums 6 erstrecken kann. Statt dessen ist es aber auch möglich, im Formkern 3 eine Heizzone vorzusehen, die in der Betriebsstellung des Formkerns erst im Abstand unterhalb des oberen Endes des Formraums 6 beginnt und sich bis zum unteren Ende des Formraums 6 erstreckt.

Der Formmantel 4 und/oder der Formkern 3 können eine Heizzone 48 aufweisen, die Mikrowellen-Generatoren 47 als Wärmeerzeuger umfaßt. Die Mikrowellen-Heizzone 48 ist bevorzugt dem Formmantel 4 im Bereich seines Oberteils 7 zugeordnet und zusätzlich zur Beheizung mit Heizmitteln vorerwähnter Art vorgesehen, wenngleich grundsätzlich auch eine ausschließlich über elektromagnetische Mikrowellen erfolgende Beheizung denkbar ist.

Der Formkern 3 weist eine Rüttelzone auf, die zu Beginn eines Herstellungsvorganges zunächst die Mineralgußmasse in dem an das untere Ende des Formraums 6 angrenzenden unteren Teil des Formraums verdichtet und dann mit ansteigendem Füllstand der Mineralgußmasse im Formraum 6 diese auch in nach oben angrenzenden Bereichen des Formraums und schließlich in jenem Bereich des Formraums 6 verdichten soll, der an das obere Ende des Formraums 6 angrenzt. Dies kann in der Weise verwirklicht sein, daß im Formkern 3 eine axial begrenzte Rüttelzone ausgebildet ist, die sich bei Beginn des Herstellungsvorganges in Höhe des unteren Bereichs des Formraums 6 befindet und dann durch Hochziehen des Formkerns 3 in eine an das obere Ende des Formraums 6 angrenzende obere Endstellung bewegt wird, in der sie dann während des weiteren Herstellungsvorganges ortsfest verbleibt.

Die Rüttelzone kann sich jedoch statt dessen auch über die gesamte Höhe des Formraums 6 erstrecken und dabei von axial begrenzten, übereinander angeordneten Teilrüttelzonen 50,51,52 gebildet sein, die unabhängig voneinander ein- und abschaltbare Schwingungserzeuger 55 aufweisen. Die Teilrüttelzonen 50,51,52 können dabei je ein gesondertes Formkernrohrstück umfassen, das unter Belassung einer von einer elastischen Dichtung überbrückten Fuge 54 unabhängig an einem Innenträger des Formkerns 3 abgestützt ist und jeweils eigene Schwingungserzeuger 55 trägt. Der dargestellte Formkern 3 weist drei Teilrüttelzonen 50,51,52 auf, die durch Fugen 54 voneinander und den ober- und unterseitig anschließenden Teilen des Formkerns 3 getrennt sind. Dementsprechend kann durch Einschalten der Schwingungserzeuger erst die Teilrüttelzone 50, dann die Teilrüttelzone 51 und schließlich die Teilzone 52 aktiviert und so der aktive Bereich der Rüttelzonen in Stufen von unten nach oben auf die volle Höhe des Formraums 6 ausgedehnt werden. Im Falle des Abschaltens der Schwingungserzeuger in der Teilrüttelzone 50 nach Einschalten der Schwingungserzeuger in der Teilrüttelzone 51 und durch Abschalten der Schwingungserzeuger in der Teilrüttelzone 51 nach Einschalten der Schwingungserzeuger in der Teilrüttelzone 52 kann der aktive Bereich der Rüttelzone auch von unten nach oben axial verlagert werden.

Zur Herstellung eines Folienkörpers in Gestalt eines Muffenrohres M werden ausgehend von der Stellung der Teile in Fig. 1 zunächst die Halbteile 10,11 des Unterteils 9 des Formmantels 4 durch eine Bewegung in Richtung der Pfeile 21,22 in ihre Betriebsstellung überführt, in der der Saughaftbereich 38 mit dem unteren Ende des Folienvorhangs 34 in Gegenüberlage gelangt und durch Anlegen an Unterdruck diesen fixiert. Danach wird der Formkern 3 in eine Stellung abgesenkt, in der sein Saughaftbereich 39 dem Saughaftbereich 40 des Verschlußteils 14 fluchtend gegenüberliegt. In dieser Stellung der Teile wird der Saughaftbereich 39 deaktiviert und der Saughaftbereich 40 aktiviert, so daß der Folienvorhang 33 aus der Fixierung am unteren Ende des Formkerns 3 gelöst und in eine Fixierung am Verschlußteil 14 überführt wird.

Nach dieser Vorbereitung der Formvorrichtung für den Herstellungsbetrieb befinden sich deren Teile in der Stellung gemäß Fig. 2, in der nunmehr die Formvorrichtung 1 in eine alternierende Schwenkbewegung um die Längsmittelachse 2 versetzt wird. Mit oder nach Einsetzen dieser alternierenden Schwenkbewegung wird die Füllvorrichtung 5 in Betrieb gesetzt und Mineralgußmasse über den Auslaß 26 in den Formraum 6 eingefüllt. Zu diesem Zeitpunkt sind die Heizzonen des Formmantels 4 und des Formkerns 3 in Betrieb mit der Folge, daß die Begrenzungswände des Formraums 6 ihre vorgegebene Betriebstemperatur, beispielsweise in der Größenordnung von 70-100°, haben.

Mit Beginn des Befüllens des Formraums 6 wird die unterste Teilrüttelzone 50 des Formkerns 3 in Betrieb genommen, und die Teilrüttelzonen 51 und 52 werden eingeschaltet, sobald der Füllstand jeweils deren unteres Ende erreicht. Mit Einschalten der Teilrüttelzone 51 kann die Rüttlung in der Teilrüttelzone 50 abgeschaltet und mit Einschalten der Teilrüttelzone 52 auch die Rüttlung in der Teilrüttelzone 51 abgeschaltet werden, so daß nunmehr nur noch eine Rüttlung im Bereich der Teilrüttelzone 52 erfolgt.

Bei Erreichen des oberen Sollfüllstandes im Formraum 6 wird die weitere Zufuhr an Mineralgußmasse zunächst unterbrochen, bis infolge der Erwärmung der Mineralgußmasse in dieser der Aushärtevorgang im Bereich des Unterteils 9 bzw. im unteren Bereich des Oberteils 7 einsetzt und zu einer ersten Verfestigung der Mineralgußmasse führt, die es erlaubt, nunmehr mit dem Absenken des Verschlußteils 14 samt Unterteil 9 entlang den Führungen 24 zu beginnen. Mit Einsetzen des Absenkvorganges gerät die Gutsäule im Formraum 6 als Ganzes in eine durch Schwerkraft hervorgerufene, gegebenenfalls durch die Zugwirkung auf die Folienvorhänge 33,34 unterstützte Abwärtsbewegung, mit deren Beginn die Zufuhr an Mineralgußmasse durch die Füllvorrichtung 5 wieder aufgenommen wird, die so dosiert wird, daß der Füllstand im Formraum 6 im wesentlichen konstant auf Sollhöhe gehalten wird. Mit Beginn des Absenkens der Gutsäule im Formraum 6 wird die Heizzone 48 zusätzlich aktiviert, um den Wärmeübergang auf die in Bewegung befindliche Gutsäule zu verstärken und sicherzustellen, daß in der sich fortschreitend im Formraum 6 zwischen Oberteil 7 und Formkern 3 abwärts bewegenden Mineralgußmasse ein Aushärtevorgang eingeleitet wird, der in der jeweils aus dem Oberteil 7 austretenden Mineralgußmasse bereits jene Festigkeit erzeugt, die bei weiterer Abwärtsbewegung die notwendige Formhaltigkeit des Formkörpers M sichert.

Im allgemeinen ist es möglicht, das Rütteln und Erwärmen bei kontinuierlicher Befüllung des Formraumes und kontinuierlichem Absenken der Gutsäule so zu steuern, daß die Bildung des Formkörpers M stetig fortschreitet. Es ist aber auch denkbar, die Bildung des Formkörpers M in Stufen vorzunehmen. So kann zu Beginn des Herstellungsvorganges der Formraum 6 sehr schnell bis auf Sollhöhe befüllt und an das Befüllen und Rütteln eine Phase angeschlossen werden, in der die Mineralgutmasse lediglich erwärmt wird. Daran kann sich dann ein relativ schneller Absenkvorgang der Gutsäule unter entsprechendem Aufrechterhalten des Sollstandes im Formraum 6 anschließen, bis annähernd der gesamte vorverfestigte Teil der Gutsäule aus dem Formraum im Oberteil 7 herausbewegt ist. Zu diesem Zeitpunkt wird die weitere Absenkbewegung der Teile 9,14 unterbrochen, bis die zu diesem Zeitpunkt im Formraum im Oberteil 7 befindliche Gutsäule die für eine Austragung aus dem Formraum 6 erforderliche Vorverfestigung infolge des eingeleiteten Aushärtevorgangs erhalten hat. Anschließend wird erneut in einer schnellen Absenkbewegung dieser Teil der Gutsäule im wesentlichen aus dem Formraum 6 ausgetragen und in diesem im Stillstand eine nachgefüllte Gutmasse zum nächsten Austrag vorbereitet,bis die Herstellung des Formkörpers abgeschlossen ist.

Die Frage einer kontinuierlichen Bewegung der Gutsäule durch den Formraum 6 oder einer intermittierenden Bewegung der Mineralgutmasse hängt im wesentlichen von der Rezeptur der Mineralgußmasse und der aus dieser resultierenden Auslösetemperatur für den Aushärtevorgang, der Topfzeit und der Aushärtegeschwindigkeit ab, wobei eine Mineralgußmasse bevorzugt Anwendung findet, die durch Zusatz eines Härtemittels eine über die Umgebungstemperatur angehobene, vorzugsweise im Bereich von etwa 50-90°, vorteilhaft zwischen 60-70°, liegende Auslösetemperatur darbietet und einen Aushärtungsbeschleuniger, beispielsweise einen Kobalt-Beschleuniger, enthält, der den Aushärtevorgang verkürzt.

Hat im Zuge des auf vorbeschriebene Weise erfolgenden Herstellungsvorganges die Gutsäule eine der Sollänge für das herzustellende Rohr entsprechende Länge erreicht, wird die weitere Zufuhr von Mineralgutmasse durch Abschalten der Füllvorrichtung 5 beendet und der Behandlungsvorgang fortgesetzt, bis die Teile im wesentlichen die in Fig. 3 veranschaulichte Stellung erreicht haben, in der sich das Verschlußteil 14 und das Unterteil 7 in ihrer unteren Endstellung befinden. Das obere Ende des hergestellten Muffenrohrs M befindet sich dabei in einem vorgegebenen Abstand unterhalb des Oberteils 7.

Zur Entformung des Muffenrohrs M wird nun zunächst der Formkern 3 ein Stück nach oben bewegt, bis er sich mit seinem unteren Ende dicht oberhalb der durch die Vorrichtung 43 definierten Trennebene befindet, in der die Vorrichtung 43 nachfolgend die Folienvorhänge 33,34 durchtrennt. Durch Aktivieren des Saughaftbereiches 39 des Formkerns 3 und des Saughaftbereiches 37 des Oberteils 7 wurden zuvor die Folienvorhänge 33,34 fixiert. Sodann werden die Halbteile 10,11 entsprechend den Pfeilen 17,18 entlang der Führungen 12,13 horizontal in die Entformungstellung auseinandergefahren. Zugleich damit werden auch die des Muffeninnenformteils 16 Formsegmente mittels der Antriebe 45 in ihre Entformungsstellung einwärts verschoben, so daß das außen- und innenseitig noch von Folie umgebene Muffenrohr M mittels eines Hebezeugs entfernt und weiteren Behandlungen zugeführt werden kann. Anschließend wird der Hubtisch 23 entlang der Führungen 24 in Richtung der Pfeile 19,20 aufwärts verschoben, bis die Stellung gemäß Fig. 1 erreicht ist, von der ausgehend nunmehr ein neuerlicher Herstellungsvorgang beginnen kann.

Bei einer Herstellung von Rohren mit über die gesamte Länge gleichbleibendem Querschnitt kann auf das Unterteil 9 verzichtet werden, und das Verschlußteil 14 kann im wesentlichen allein aus der Trägerplatte 15 bestehen. Die Prozeßsteuerung kann programmgesteuert anhand von Meßdaten wie der Außentemperatur der Gutsäule in Höhe des unteren Endes des Oberteils 7, dem Gewicht oder dem Volumen der zugeführten Mineralgutmasse, des Füllstandes im Formraum 6, der Position des Verschlußteils auf seinem Wege in die untere Endstellung etc. automatisch ablaufen. Je nach Länge und Kaliber herzustellender Rohre und Zusammensetzung der Mineralgußmasse lassen sich Taktzeiten in der Größenordnung von 2 - 4 Min. erreichen.

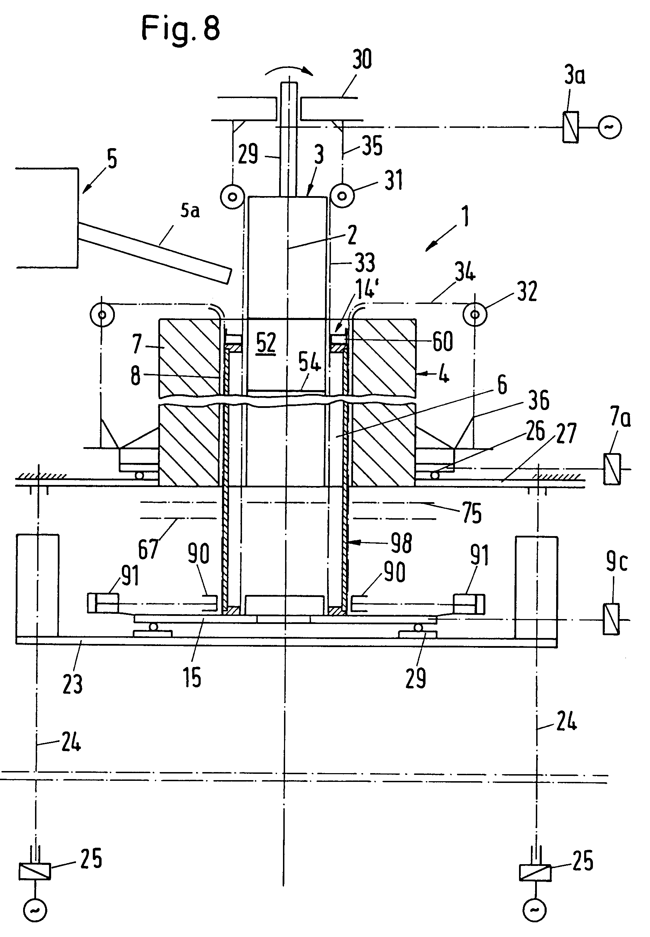

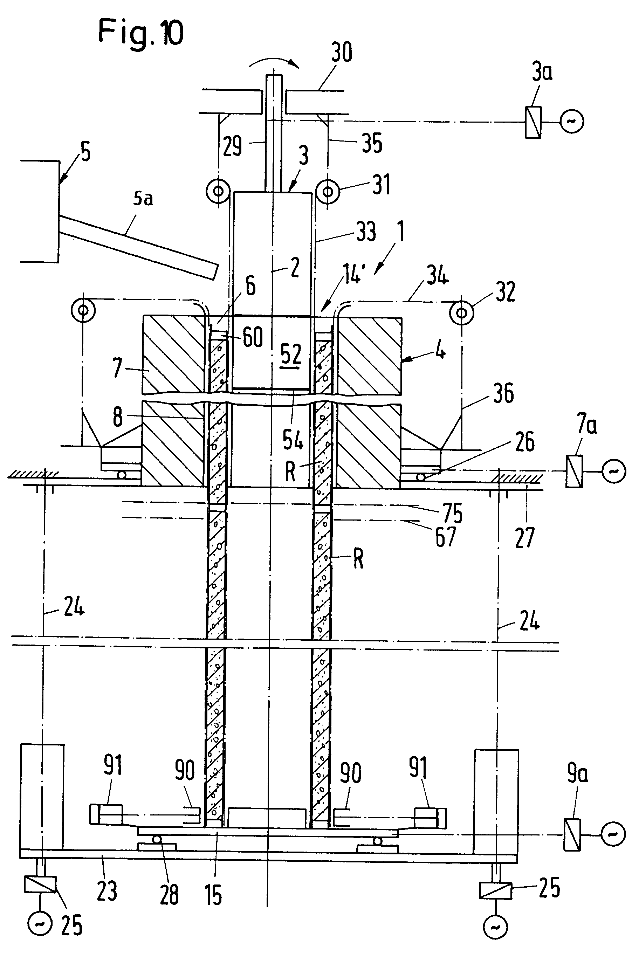

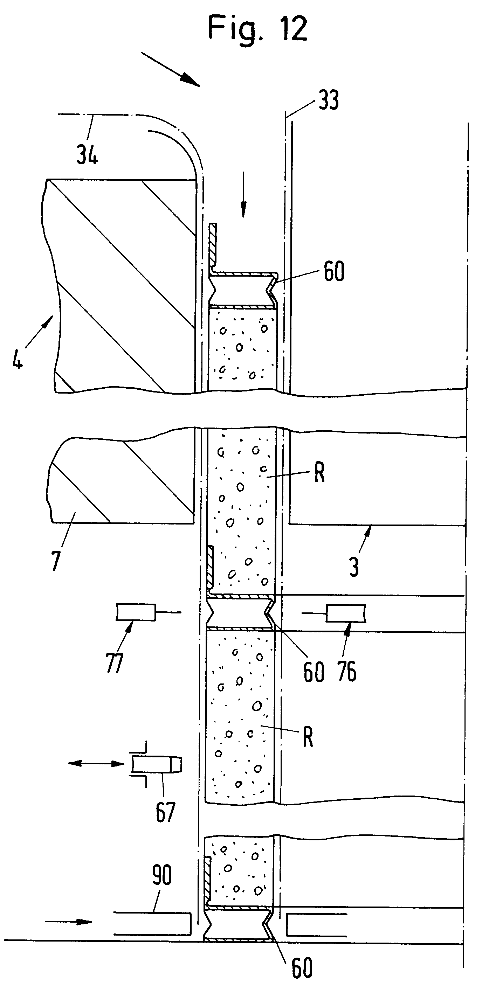

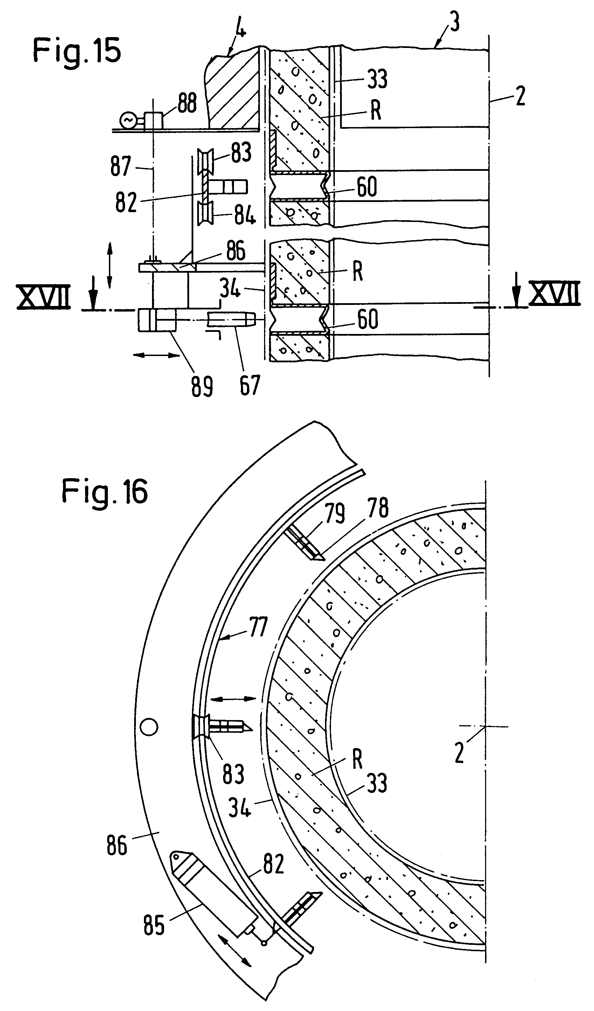

Die in Fig. 8 bis 19 veranschaulichte zweite Ausführung einer Formvorrichtung nach der Erfindung entspricht in weiten Teilen der nach Fig. 1 bis 7, und die übereinstimmenden Teile sind mit gleichen Bezugszeichen versehen. Abweichend von der Formvorrichtung nach Fig. 1 bis 7 hat die zweite Ausführung nach Fig. 8 bis 19 einen Formmantel 4, der nur aus dem ortsfesten, geschlossenen Oberteil 7 Teil besteht. Das Unterteil 9 wird nicht benötigt, da mit der zweiten Ausführung Rohre mit gleichbleibendem Querschnitt oder mit einem oder zwei Spitzenden oder Enden ähnlicher Art hergestellt werden sollen, bei denen die Formänderungen innerhalb der zylindrischen Kontur des Rohrkörpers liegen.

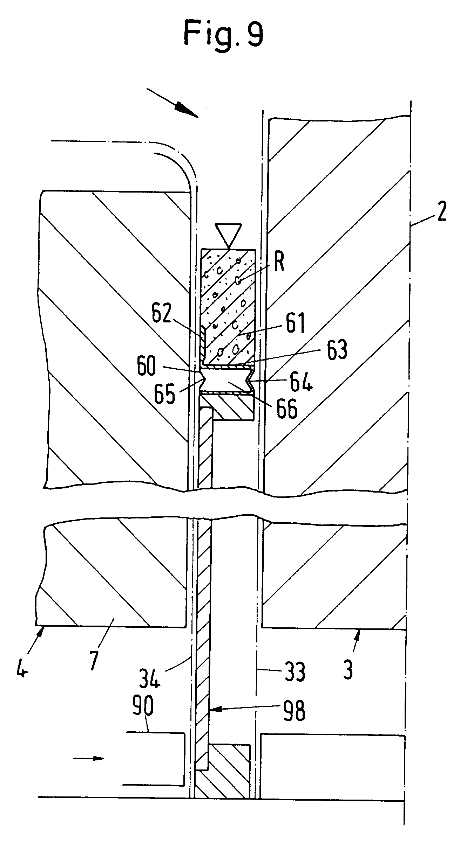

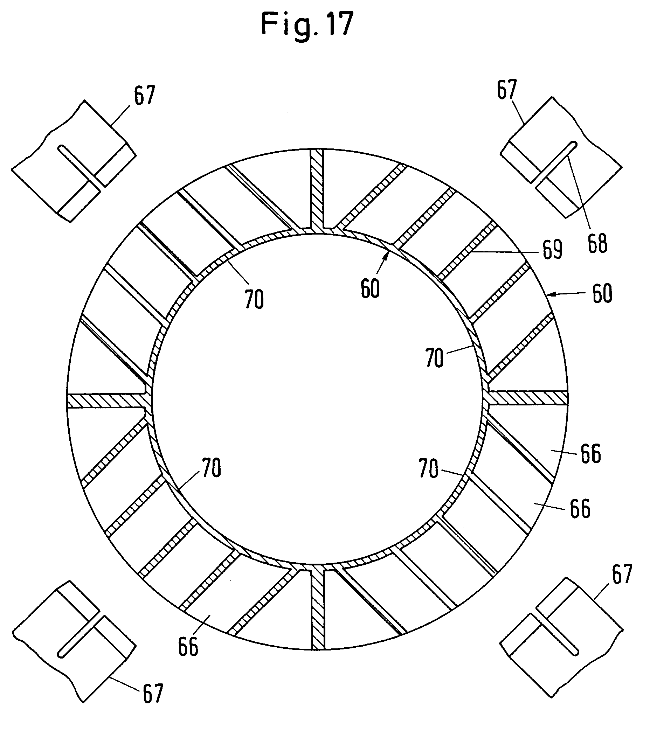

Eine grundsätzlich andere Ausgestaltung hat bei der zweiten Ausführung das Verschlußteil 14', das zwar auch die Trägerplatte 15, in erster Linie jedoch einen in den Formraum 6 zwischen Formmantel 4 und Formkern 3 von oben einsetzbaren, den Formraum 6 unterseitig begrenzenden Trennkörper 60 umfaßt. Der Trennkörper 60 ist, wie dies beispielsweise die Fig. 9 und 17 erkennen lassen, als Ringteil ausgebildet, das zumindest ein benachbartes Ende 61 eines zu bildenden Formkörpers R zu einem Spitzende formt. Hierzu ist der Trennkörper 60 mit einem äußeren Ringflansch 62 versehen, der sich von der Oberseite 63 des Trennkörpers 60 am Außenumfang und damit parallel zur benachbarten Innenwand 8 des Formmantels 4 nach oben erstreckt. Der Ringflansch 62 ist in der Zeichnung nur schematisch wiedergegeben. Seine genaue Formgestalt bestimmt sich nach der Außenform des zu bildenden Rohrendes. Sofern Formkörper R mit zwei Spitzenden gebildet werden sollen, kann der Trennkörper 60 zusätzlich mit einer der Ringschulter 62 entsprechenden, sich nach unten erstreckenden Ringschulter (nicht dargestellt) versehen sein.

Der Trennkörper 60 ist innen- und außenseitig mit einer umlaufenden Einziehung 64 bzw. 65 für den Eingriff von Folientrenngliedern versehen, auf die weiter unten noch näher eingegangen wird. Der Trennkörper 60 weist ferner nach außen offene Haltetaschen 66 auf, in die weiter unten noch näher zu beschreibende Zwischenstützglieder 67, die mit einem vertikal ausgerichteten Mittelschlitz 68 versehen sein können, einführbar sind. Infolge der Schlitze 68 sind die Zwischenstützglieder 67 jeweils in zwei Haltetaschen 66 einführbar, wobei sie in ihrem Schlitz 68 eine Trennwand 69 zwischen benachbarten Haltetaschen 66 aufnehmen.

Wie der Fig. 17 entnommen werden kann, ist der Trennkörper 60 in vertikaler Richtung in mehrere, bei dem dargestellten Beispiel in vier Segmente 70 unterteilt, die es ermöglichen, den Trennkörper 60 beispielsweise mit Hilfe einer nicht näher veranschaulichten Zuführvorrichtung in einem Bereich unmittelbar oberhalb der Füllöffnung des Formraumes 6 durch Zusammenfahren der Segmente 70 zusammenzusetzen und den zusammengesetzten Trennkörper 60 alsdann in den Formraum 6 von oben einzuführen. Durch die segmentierte Ausführung kann der Trennkörper 60 nach Abschluß der Formkörperbildung vom Formkörper R durch radiales Abziehen der Segmente 70 gelöst werden.

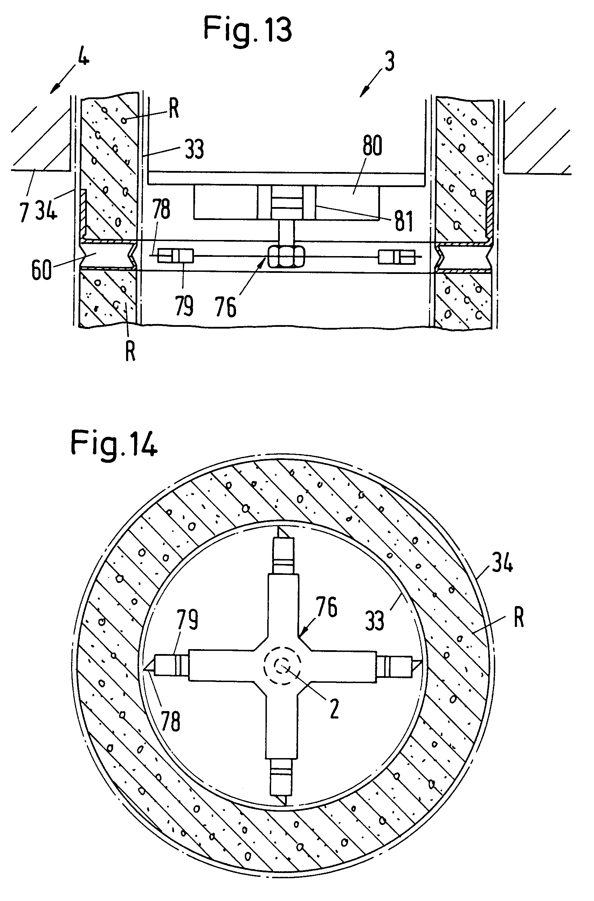

Unterhalb von Formmantel 4 und Formkern 3 ist eine Folientrennvorrichtung 75 mit einem innerem und einem äußeren Trennwerkzeug 76 bzw. 77 vorgesehen, die in einigen der Figuren der Zeichnung nur mit einer die Trennebene versinnbildlichenden Linie veranschaulicht ist. Wie insbesondere jedoch die Fig. 13. bis 16 veranschaulichen, ist jedes Trennwerkzeug 76, 77 mit einer Anzahl von radial gerichteten Schneidmessern 78 versehen, die jeweils mittels eines schematisch veranschaulichten Druckmittelzylinders 79 aus der dargestellten Neutralstellung radial (auswärts bzw. einwärts) in eine Betriebsstellung bewegbar sind, in der sie jeweils die zylindrische Fläche der Folienvorhänge 33 bzw. 34 durchgreifen und in die Einziehungen 64 bzw. 65 eines Trennkörpers 60 vorspringen, der sich beim Betätigen der Folientrennvorrichtung 75 mit seiner horizontalen Mittelebene in Höhe der Trennebene der Folientrennvorrichtung 75 befindet.

In der Betriebsstellung der Schneidmesser 78 sind die Trennwerkzeuge 76, 77 um ihre jeweilige Mittelachse alternierend verschwenkbar, die mit der Längsmittelachse 2 der Formvorrichtung 1 zusammenfällt. Der Schwenkwinkel ist dabei so gewählt, daß die Schneidmesser 78 gemeinsam einen ununterbrochenen Kreisbogen durchlaufen.

Das innere Trennwerkzeug 76 ist an der Unterseite des Formkerns 3 befestigt, in einem Lagerteil 80 drehbar gelagert und mittels eines Antriebs 81 alternierend schwenkbar. Das äußere Trennwerkzeug 77 umfaßt einen Ringträger 82, der zwischen oberen und unteren Führungsrollen 83, 84 geführt und mittels eines Druckmittelantriebs 85 alternierend verschwenkbar ist.

Die Führungsrollen 83, 84 sind auf der Oberseite eines Außentragringes 86 abgestützt, der an der Unterseite des Formmantels 4 aufgehängt ist. Der Außentragring 86 ist hierzu an Führungen 87 parallel zur Längsmittelachse 2 der Formvorrichtung 1 verschieblich abgestützt und mittels eines Antriebs 88 zwischen einer oberen Endstellung und einer unteren Endstellung bewegbar. Bei einer besonders einfachen Ausführung sind die Führungen 87 als Gewindespindeln ausgebildet, die Gegengewinde im Außentragring 86 durchgreifen und mittels Synchronmotoren 88 untereinander gleichförmig antreibbar sind, so daß der Außentragring 86 eine exakte Parallelverschiebung erfährt.

Der Außentragring 86 stützt an seiner Unterseite die Zwischenhalteglieder 67 ab, die jeweils mittels eines Druckmittelantriebs 89 aus einer Neutralstellung radial einwärts in Eingriff mit den Haltetaschen 66 eines Trennkörpers 60 bewegbar sind. Auf diese Weise sind die Zwischenhalteglieder 67, von denen beispielsweise vier über den Umfang verteilt vorgesehen sind, zu Zwecken auf und ab bewegbar, auf die weiter unten noch eingegangen wird.

Die Trägerplatte 15 trägt an ihrer Oberseite Fixierbacken 90, die jeweils mittels eines Druckmittelantriebs 91 aus einer Neutralstellung radial einwärts in Eingriff mit dem unteren Ende eines auf der Trägerplatte 15 abgestützten Formkörpers R bzw. dem dieses Ende umgebenden Trennkörper 60 bewegbar sind, um das Formkörperende auf der Trägerplatte 15 zu sichern.

Zum Austragen fertiger Formkörper R aus der Formvorrichtung 1 ist in dem Höhenbereich zwischen der Trägerplatte 15 in ihrer unteren Endstellung und dem Außentragring 86 eine Austragvorrichtung 92 vorgesehen, die in Neutralstellung seitlich neben der Formvorrichtung 1 gelegen ist. Die Austragvorrichtung 92 weist zwei in Greifausgangsstellung einander diametral zum Formkörper R gegenüberliegende Gruppen von übereinander angeordneten Sauggreifern 93, 94 auf, die mittels je eines Druckmittelantriebs 95 aus einer Neutralstellung radial gegenläufig einwärts in Anlage an den Formkörper R bewegbar und von einer nicht dargestellten Druckmittelquelle her mit Unterdruck beaufschlagbar sind.

Die Greifer 93, 94 sind an einem Gestell 96 abgestützt, das horizontal bewegbar ist und es ermöglicht, einen erfaßten fertigen Formkörper R aus seiner Stellung in der Formvorrichtung 1 an einen Abstellplatz zu verbringen, der beispielsweise von einer weiteren Bearbeitungsstation, einer Kühlkammer oder dgl. gebildet sein kann. Die Bewegung des Gestells 96 kann beispielsweise mit Hilfe von Gewindespindeln 97 bewerkstelligt werden, die von nicht dargestellten Antriebsmotoren antreibbar sind.

Für eine Inbetriebnahme der Vorrichtung werden die Folienvorhänge 33, 34 in den Formraum 6 eingehängt und in den Formraum 6 und dabei zwischen die Folienvorhänge 33, 34 ein rohrförmiger Distanzkörper 98 von unten eingeführt, der sich auf der Trägerplatte 15 abstützt und auf dieser mit Hilfe der Fixierbacken 90 gesichert ist. Alsdann wird ein Trennkörper 60 von oben in den Formraum 6 zwischen die Folienvorhänge 33, 34 eingeführt und auf das obere Ende des Distanzkörpers 98 aufgelegt.

Zu Beginn eines Herstellungsvorganges für einen Formkörper R befindet sich der erste Trennkörper 60 in einer Stellung verhältnismäßig dicht unterhalb einer vorgegebenen oberen Sollhöhe für die Mineralgußmasse im Formraum 6, so daß nach Beginn einer Einführung von Mineralgußmasse mittels der Füllvorrichtung 5 schon bald die vorgegebene Sollhöhe erreicht wird. Zum Zeitpunkt des Beginns der Beschickung des Formraumes 6 mit Mineralgußmasse befinden sich die Teile 3, 4 (einschl. der mit diesen verbundenen Teile) in alternierender Schwenkbewegung, so daß sich die Mineralgußmasse schnell und gleichmäßig im Formraum 6 verteilt. Ferner befindet sich zu diesem Zeitpunkt auch bereits die an das obere Ende des Formraumes 6 angrenzende Rüttelzone 52 des Formkerns 3 in Betrieb, so daß unmittelbar mit dem Beginn des Einfüllens von Mineralgußmasse diese im Formraum 6 gerüttelt wird.

Sobald der vorgegebene Füllstandspegel erreicht ist, wird der Hubtisch 23 in eine Abwärtsbewegung versetzt, die so auf die Zufuhr an Mineralgußmasse durch die Füllvorrichtung 5 abgestimmt ist, daß die Sollhöhe stets erhalten bleibt. Oberhalb des mit dem Hubtisch 23 absinkenden Trennkörpers 60 baut sich dementsprechend fortschreitend und bevorzugt kontinuierlich eine Gutsäule im Formraum 6 auf, die nach Passieren der Rüttelzone 52 eine sich abwärts anschließende Heizzone durchläuft und in dieser bevorzugt sowohl von innen als auch von außen einer Erwärmung ausgesetzt wird. Im Zuge der Erwärmung wird der Aushärtevorgang ausgelöst, der dazu führt, daß der entstehende Formkörper R jeweils in einen Bereich, der oberhalb der Austrittsebene des Formraumes 6 gelegen ist, einen Aushärtungsgrad erreicht, der dem austretenden Formkörperende eine solche Festigkeit (beispielsweise 20 - 25 % der Endfestigkeit) vorgibt, die unerwünschte Formveränderungen ausschließt.

Sobald der Trennkörper 60 in den Wirkungsbereich der Folientrennvorrichtung 75 gelangt, wird dem Außentragring 86 eine Abwärtsbewegung vermittelt, die der Abwärtsbewegung des Trennkörpers 60 entspricht, so daß während des sich anschließenden Durchtrennens der Folienvorhänge 33, 34 zwischen dem Trennkörper 60 und den Schneidmessern 78 der Folientrennvorrichtung 75 keine axiale Relativbewegung auftritt. Sobald der Folientrennvorgang abgeschlossen ist und die Schneidmesser 78 in ihre Neutralstellung zurückgekehrt sind, kehrt der Außentragring 86 in seine obere Endstellung zurück, in der zu diesem Zeitpunkt die Zwischenstützglieder 67 in einer Ebene liegen, die sich noch unterhalb des Trennkörpers 60 befindet. Sobald der Trennkörper 60 im Zuge seiner stetigen Abwärtsbewegung in den Wirkungsbereich der Zwischenstützglieder 67 gelangt, beginnt der Außentragring 86 erneut eine synchrone Abwärtsbewegung, so daß die Zwischenstützglieder 67 in die Haltetaschen 66 des Trennkörpers 60 eingeführt werden können, ohne daß zwischen den Teilen eine axiale Relativbewegung stattfindet.

Sobald die Zwischenstützglieder 67 in Eingriff mit dem Trennkörper 60 gelangt sind, übernehmen sie die Abstützung des Trennkörpers 60 und damit des auf diesem ruhenden Formkörper R, soweit dieser bereits entstanden ist. Dies ermöglicht es, den Hubtisch 23 und die auf diesem gelagerte Stützplatte 15 mit erhöhter Geschwindigkeit abwärts zu bewegen mit der Folge, daß sich der Distanzkörper 98 aus dem Stützkontakt an der Unterseite des Trennkörpers 60 löst und, sobald der Hubtisch 23 seine untere Endstellung erreicht hat, die Austragvorrichtung 92 in Tätigkeit treten kann. Für ein Herausnehmen des Formkörpers R wird zunächst der Hubtisch 23 mit dem Distanzkörper 98 noch einmal um ein kurzes Wegstück angehoben, die Sauggreifer 93, 94 in Eingriff gebracht und die Fixierbacken 90 gelöst, wonach der Hubtisch 23 erneut in seine untere Endstellung herabgefahren wird. Dadurch ist der Distanzkörper 98 durch die Sauggreifer 93, 94 gehalten freibeweglich und kann mit Hilfe des Gestells 96 aus der Formvorrichtung 1 herausbewegt werden.

Sobald der Distanzkörper 98 entfernt ist, wird der Hubtisch 23 wieder hoch- und in Anlage am Trennkörper 60 gefahren. Sobald diese Anlage eintritt, wird die Aufwärtsbewegung in eine mit den Zwischenstützgliedern synchrone Abwärtsbewegung umgewandelt, bei der nunmehr die Stützplatte 15 wieder die Abstützfunktion des Trennkörpers 60 und des darüber befindlichen Formkörpers R übernehmen kann. Sobald die Fixierbacken 90 das untere Ende des Formkörpers R bzw. den Trennkörper 60 auf der Stützplatte 15 gesichert haben, werden die Zwischenstützglieder 67 in ihre Neutralstellung zurückbewegt, wonach der Außenringträger 86 in seine obere Endstellung zurückkehrt.

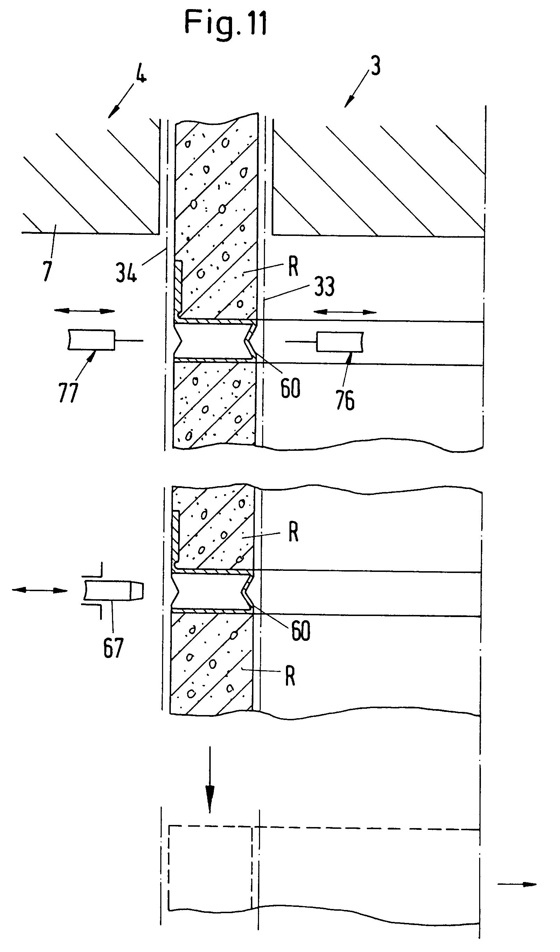

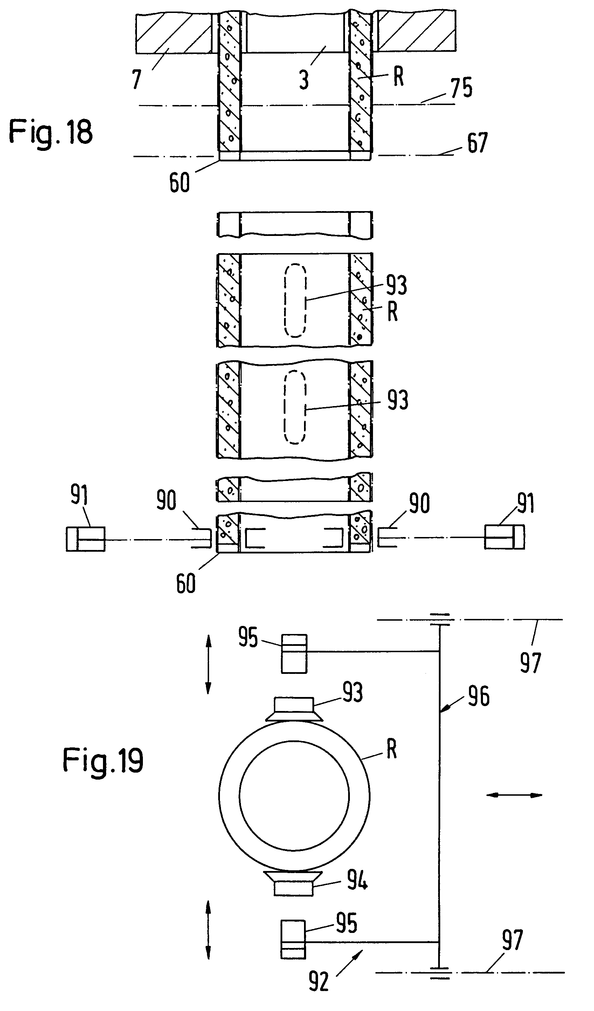

Sobald der in Entstehung befindliche Formkörper R seine vorgegebene Länge erreicht hat, was durch Wegemessung, Gewichtsbestimmung oder auf sonst geeignete Weise (Lichtschranke) festgestellt werden kann, wird die Zufuhr von Mineralgutmasse abgeschaltet und auf das obere Ende der Gutsäule ein Trennkörper 60 aufgebracht, der sich nach Einbringen in den Formraum 6 unter Schwerkraft auf das obere Ende der Gutsäule auflegt oder auch mit Hilfe von Druckgliedern auf das obere Ende der Gutsäule aufgesetzt werden kann. Sobald der neue Trennkörper 60 auf dem oberen Ende der Gutsäule aufliegt, wird die Zufuhr von Mineralgußmasse wieder fortgesetzt und zunächst in verstärktem Umfange durchgeführt, so daß kurzfristig trotz weiterer Abwärtsbewegung des zuvor gebildeten Formkörpers R die Gutsäule des nachfolgend zu bildenden Formkörpers R die vorgegebene Sollhöhe im Formraum 6 wieder erreicht. Danach wird der Herstelungsvorgang in schon beschriebener Weise fortgesetzt, wobei nach Durchtrennen der Folienvorhänge 33, 34 und Ablösen des aus dem Formraum 6 herausgetretenen fertigen Formkörpers R von dem über diesem befindlichen Trennkörper 66 dieser fertiggestellte Formkörper R mit Hilfe der Austragvorrichtung 92 aus der Formvorrichtung 1 so herausgenommen wird, wie das zuvor bezüglich des Distanzkörpers 98 beschrieben wurde. Die wieder angehobene Stellung des Formkörpers R zum Zeitpunkt der Herausbewegung des Formkörpers R durch die Austragvorrichtung 92 ist in Fig. 18 in Phantomlinien veranschaulicht. Fig. 11 veranschaulicht zugleich in Phantomlinie das obere Ende des durch beschleunigtes Absenken des Hubtisches 23 aus dem Kontakt mit dem darüber befindlichen Trennkörper 60 des bewegten Formkörpers R.

Die mit der zweiten Ausführung der Formvorrichtung 1 hergestellten Rohre können als Vortriebsrohre verwendet oder bei Ausbildung mit beidseitigem Spitzende mit Hilfe von Doppelmuffen zu einem Rohrstrang zusammengesetzt werden. Sie können aber auch als Rohling für eine weitere Umformung in einer Behandlungsstation Verwendung finden, in der die Rohrenden zum Beispiel spanabhebend verformt werden.

Bevorzugt und erfindungsgemäß werden nach dem erfindungsgemäßen Verfahren und mit der zweiten Ausführung der Formvorrichtung 1 hergestellte Formkörper als rohrförmiges Hauptteil für die Bildung eines Muffenrohres verwendet, das aus diesem Hauptteil und einem gesondert gebildeten Muffenteil besteht, der mit einem Anschlußbereich das Ende des Hauptteils umgibt, wobei beide Teile im Bereich einander gegenüberliegender Flächen untereinander fugenfrei verbunden werden.

## Patentansprüche

1. Verfahren zur Herstellung von Rohren oder rohrähnlichen Formkörpern (M;R) aus Polymerbeton, bei dem Mineralgußmasse in den Formraum (6) einer mit ihrer Längsmittelachse (2) vertikal ausgerichteten Formvorrichtung (1), die einen Formkern (3) und einen diesen im Abstand umgebenden Formmantel (4) umfaßt, eingebracht, gerüttelt und anschließend einem Härtevorgang unter Wärmezufuhr unterzogen wird, **dadurch gekennzeichnet**, daß
- zu Beginn eines Herstellungsvorganges bei oder nach Befüllung eines Teils des Formraumes (6) mit Mineralgußmasse mit der Rüttlung der Mineralgußmasse im Formraum (6) begonnen wird,
- mit dem Anwachsen der Gutsäule aus Mineralgutmasse entlang der Längsmittelachse (2) der Formvorrichtung (1) zum oberen Ende des Formraumes (6) hin und nach dem Beginn des Rüttelvorgangs der Mineralgußmasse in einer der Rüttelzone (50,51,52) nachfolgenden oder mit der Rüttelzone übereinstimmenden Heizzone (48) Wärme zugeführt wird,
- nach Beginn des Härtevorgangs in der Mineralgußmasse im unteren Bereich des Formraumes (6) die Gutsäule im Formraum als Ganzes abwärts verlagert und ihr jeweils in Aushärtung befindlicher Bereich aus dem Formraum (6) ausgetragen wird, und
- die Gutsäule durch kontinuierliches oder intermittierendes Nachfüllen von Mineralgußmasse in den Formraum (6) ergänzt und die ergänzte Mineralgußmasse durch die Rüttel- und die Heizzone (50,51,52;48) hindurch zugeführt wird.

2. Verfahren nach Anspruch 1, **dadurch gekennzeichnet**, daß die Zufuhr an Mineralgußmasse nach Erreichen einer oberen Sollhöhe im Formraum (6) bis zum Ende der Herstellungs eines Formkörpers (M;R) im wesentlichen konstant gehalten wird.

3. Verfahren nach Anspruch 1 oder 2, **dadurch gekennzeichnet**, daß zu Beginn eines Herstellungsvorganges zunächst ein unterer Teil des Formraumes (6) mit Mineralgußmasse befüllt wird.

4. Verfahren nach einem der Ansprüche 1 bis 3, **dadurch gekennzeichnet**, daß die Rüttel- und die Heizzone (50,51,52;48) axial übereinander angeordneten Abschnitten des Formkerns (3) zugeordnet sind und bei oder nach anfänglicher Befüllung des Formraums (6) mit Mineralgußmasse durch Aufwärtsbewegen des Formkerns (3) relativ zum Formmantel (4) aus einer unteren Ausgangsstellung, in der das untere Ende der Rüttelzone (50,51,52) dem unteren Ende des Formraumes (6) benachbart ist, in eine obere, die Hauptbetriebsstellung bildende Endstellung überführt werden, in der das obere Ende der Rüttelzone dem oberen Ende des Formraumes benachbart ist.

5. Verfahren nach einem der Ansprüche 1 bis 4, **dadurch gekennzeichnet**, daß sich die Rüttel- und/oder die Heizzone (50,51,52;48) im wesentlichen über die Höhe des Formraumes (6) erstrecken und in übereinandergelegenen Teilbereichen wahlweise aktiviert und deaktiviert werden.

6. Verfahren nach einem der Ansprüche 1 bis 5, **dadurch gekennzeichnet**, daß sich die Gutsäule mit ihrem unteren Ende auf einem den Formraum (6) an dessen unteren Ende begrenzenden Verschlußteil (14;14') abstützt und mitsamt dem Verschlußteil (14;14') nach Einleiten des Härtevorgangs in dem dem Verschlußteil benachbarten Teil der Mineralgußmasse parallel zur Längsmittelachse (2) des Formraums (6) kontinuierlich oder in mehreren Stufen über eine Weggesamtlänge abgesenkt wird, die im wesentlichen der Sollänge des herzustellenden Formkörpers (M;R) entspricht.

7. Verfahren nach Anspruch 1 oder 2, **dadurch gekennzeichnet**, daß zu Beginn eines Herstellungsvorganges zunächst ein oberer, durch einen Verschlußteil (14') im Ringraum zwischen Formmantel (4) und Formkern (3) unterseitig begrenzter Teil des Formraumes (6) mit Mineralgußmasse befüllt, die Mineralgußmasse in diesem Teil des Formraumes (6) gerüttelt und nach Erreichen der oberen Sollhöhe die Gutsäule aus Mineralgußmasse fortschreitend in den unteren Teil des Formraumes (6) abgesenkt, dort erwärmt und nach Einleiten des Härtevorganges in dem dem Verschlußteil (14') benachbarten Teil der Mineralgußmase die Gutsäule mitsamt dem Verschlußteil (14') parallel zur Längsmittelachse (2) des Formraums (6) kontinuierlich oder in mehreren Stufen über eine Weggesamtlänge abgesenkt wird, die im wesentlichen der Sollänge des herzustellenden Formkörpers (15) entspricht.

8. Verfahren nach einem der Ansprüche 1 bis 7, **dadurch gekennzeichnet**, daß während der Zuführung von Mineralgußmasse zum Formraum (6) dieser alternierend um die Längsmittelachse (2) der Formvorrichtung (1) verschwenkt wird.

9. Verfahren nach einem der Ansprüche 1 bis 8, **dadurch gekennzeichnet**, daß die Mineralgußmasse in der Heizzone (48) ausschließlich oder zusätzlich durch Beaufschlagung mit elektromagnetischen Mikrowellen erwärmt wird.

10. Verfahren nach einem der Ansprüche 1 bis 9, **dadurch gekennzeichnet**, daß die Mineralgußmasse im Formraum (6) innen- und außenseitig durch ein Trennmittel von Formkern (3) und Formmantel (4) getrennt gehalten wird.

11. Verfahren nach Anspruch 10, **dadurch gekennzeichnet**, daß als Trennmittel einander überlappende, sich zu einem Schlauchvorhang ergänzende Folienbahnen (33,34) verwendet werden.

12. Verfahren nach einem der Ansprüche 1 bis 11, **dadurch gekennzeichnet**, daß eine Mineralgußmasse verwendet wird, die durch Zusatz eines Härtemittels eine Auslösetemperatur für den Härtevorgang darbietet, die im Bereich von etwa 50 bis 90°, insbesondere von 60 bis 70°, gelegen ist, und der ein Aushärtebeschleuniger zugesetzt ist.

13. Vorrichtung zum Herstellen von Rohren oder rohrähnlichen Formkörpern (15) aus Polymerbeton, mit einer Formvorrichtung (1) mit vertikaler Längsmittelachse (2), die einen Formkern (3) und einen Formmantel (4) mit einem Formraum (6) zwischen diesen sowie eine Füllvorrichtung (5) für die Zufuhr von Mineralgußmasse von oben in den Formraum (6), eine Rüttelvorrichtung (55) und eine Heizvorrichtung (46;47) umfaßt, **dadurch gekennzeichnet**, daß
- der Formmantel (4) ein ortsfestes Teil (7) mit einer axialen Länge aufweist, die einem Bruchteil der Länge eines herzustellenden Formkörpers (15) entspricht,
- der Formkern (3) unterschiedliche Behandlungszonen darbietet, zu denen Heiz- (48) und Rüttelzonen (50,51,52) gehören,
- die behandlungsaktiven Bereiche der Behandlungszonen (48;50,51,52) axialverlagerbar sind, und
- zum unteren Abschluß des Formraumes (6) ein Verschlußteil (14;14') vorgesehen ist, das aus einer oberen Ausgangsstellung parallel zur Längsmittelachse (2) in eine untere Endstellung um ein Wegstück absenkbar ist, das im wesentlichen der Sollänge eines herzustellenden Formkörpers (M;R) entspricht.

14. Vorrichtung nach Anspruch 13, **dadurch gekennzeichnet**, daß die Behandlungszonen in axial begrenzten Längenabschnitten angeordnet sind, und zur Verlagerung von Behandlungszonen relativ zum Formmantel (4) der Formkern (3) axial aus einer unteren Ausgangsstellung in eine obere Endstellung bewegbar ist.

15. Vorrichtung nach Anspruch 13 oder 14, **dadurch gekennzeichnet**, daß zur Verlagerung von Behandlungszonen relativ zum Formmantel (4) die Behandlungszonen axial verlager- oder erweiterbar sind.

16. Vorrichtung nach einem der Ansprüche 13 bis 15, **dadurch gekennzeichnet**, daß die den Formraum (6) begrenzenden Teile (3,4,14) der Formvorrichtung (1) als Ganzes um die Längsmittelachse (2) alternierend schwenkbar gelagert sind und der Auslauf (26) der Füllvorrichtung (5) ortsfest im Bereich oberhalb des Formraums (6) ausmündet.

17. Vorrichtung nach einem der Ansprüche 13 bis 16, **dadurch gekennzeichnet**, daß der Formmantel (4) in einer senkrecht zur Längsmittelachse (2) verlaufenden Ebene in zwei Teile (7,9) unterteilt ist, von denen das Unterteil (9) in einer axial verlaufenden Ebene in zwei Halbteile (10,11) unterteilt ist, die entlang von Führungen gegenläufig horizontal aus einer geschlossenen Betriebsstellung in eine geöffnete Entformungsstellung bewegbar sind.

18. Vorrichtung nach Anspruch 16, **dadurch gekennzeichnet**, daß das Unterteil (9) des Formmantels (4) ein Muffenaußenformteil bildet.

19. Vorrichtung nach einem der Ansprüche 13 bis 18, **dadurch gekennzeichnet**, daß das Verschlußteil (14) eine vertikal auf- und abbewegliche Trägerplatte (15) umfaßt.

20. Vorrichtung nach Anspruch 19, **dadurch gekennzeichnet**, daß das Verschlußteil (14) ein auf der Trägerplatte (15) abgestütztes Muffeninnenformteil (16) umfaßt.

21. Vorrichtung nach einem der Ansprüche 17 bis 20, **dadurch gekennzeichnet**, daß das Unterteil (9) des Formmantels (4) auf der Trägerplatte (15) abgestützt und mit dieser aus deren oberer Ausgangssstellung in deren untere Endstellung absenkbar ist.

22. Vorrichtung nach einem der Ansprüche 17 bis 21, **dadurch gekennzeichnet**, daß die Halbteile (10,11) des Unterteils (9) ist der unteren Endstellung des Verschlußteils (14) in ihre Entformungsstellung überführbar und in dieser zusammen mit dem Verschlußteil (14) aufwärts in eine Zwischenstellung in Höhe ihrer Betriebsstellung anhebbar und nachfolgend horizontal gegenläufig in die Betriebsstellung bewegbar sind.

23. Vorrichtung nach einem der Ansprüche 13 bis 19, **dadurch gekennzeichnet**, daß die Trägerplatte (15) des Verschlußteils (14) auf einem entlang von Vertikalführungen verschieblichen Hubtisch (23) mittels einer Lagervorrichtung (28) um die Längsmittelachse (2) der Formvorrichtung (1) schwenkbar abgestützt ist.

24. Vorrichtung nach einem der Ansprüche 13 bis 23, **dadurch gekennzeichnet**, daß das Oberteil (7) des Formmantels (4) mittels einer Lagervorrichtung (26) um die Längsmittelachse (2) der Formvorrichtung (1) schwenkbar auf einem Träger (27) abgestützt ist.

25. Vorrichtung nach einem der Ansprüche 13 bis 24, **dadurch gekennzeichnet**, daß der Formkern (3) entlang eines Zentralführungsgliedes (29) vertikal verschiebbar und das Zentralführungsglied (29) im Bereich seines oberen Endes von einer Lagervorrichtung (30) um die Längsmittelachse (2) schwenkbar abgestützt ist.

26. Vorrichtung nach einem der Ansprüche 13 bis 25, **dadurch gekennzeichnet**, daß der Formkern (3), der Formmantel (4) und das Verschlußteil (14) durch Antriebsvorrichtungen (3a;7a;9a) synchron alternierend verschwenkbar sind.

27. Vorrichtung nach Anspruch 26, **dadurch gekennzeichnet**, daß der Schwenkwinkel etwa 300° beträgt.

28. Vorrichtung nach einem der Ansprüche 13 bis 27, **dadurch gekennzeichnet**, daß dem Formkern (3) und dem Oberteil (7) des Formmantels (4) Gruppen von Vorratsrollen (31;32) für Folienbahnen zugeordnet sind, die den Formraum (6) innen und außen auskleidene Folienvorhänge (33;34) bilden.

29. Vorrichtung nach Anspruch 28, **dadurch gekennzeichnet**, daß die dem Formkern (3) zugeordneten Vorratsrollen (31) an einem am Zentralführungsglied (29) für den Formkern (3) abgestützten Trägergestell (35) gelagert sind.

30. Vorrichtung nach Anspruch 28 oder 29, **dadurch gekennzeichnet**, daß die dem Oberteil (7) des Formmantels (4) zugeordneten Vorratsrollen (32) an einem am Oberteil (7) abgestützten Trägergestell (36) gelagert sind.

31. Vorrichtung nach einem der Ansprüche 28 bis 30, **dadurch gekennzeichnet**, daß im Bereich des unteren Randes der Innenwand (8) des Oberteils (7) des Formmantels (4), des oberen Randes der Innenwand des Unterteils (9) des Formmantels (4), des unteren Randes der Außenwand des Formkerns (3) und der dem Formkern (3) zugewandten Rückwand des Muffeninnenformteils (16) des Verschlußteils (14) ringförmige Saughaftbereiche (37,38,39,40) zur Folienfixierung vorgesehen sind.

32. Vorrichtung nach einem der Ansprüche 28 bis 31, **dadurch gekennzeichnet**, daß eine Vorrichtung (43) zum Durchtrennen der Folienvorhänge (33,34) in einer Ebene quer zur Längsmittelachse (2) der Formvorrichtung (1) und in einem vorgegebenen Abstand unterhalb der Unterseite des Oberteils (7) des Formraums (4) und oberhalb des oberen Endes eines fertigen Formkörpers.

33. Vorrichtung nach einem der Ansprüche 13 bis 32, **dadurch gekennzeichnet**, daß der Muffeninnenformteil (16) des Verschlußteils (14) aus einer Anzahl von konzentrisch zur Längsmittelachse (2) angeordneten, begrenzt radial verschiebbar abgestützten sowie mittels eines Antriebs (16a) radial zwischen einer Betriebs- und einer Entformungsstellung verschiebbaren Formsegmenten (45) besteht.

34. Vorrichtung nach einem der Ansprüche 13 bis 33, **dadurch gekennzeichnet**, daß der Formmantel (4) und/oder der Formkern (3) eine Heizzone aufweisen, die von Mikrowellen-Generatoren (47) gebildet ist oder solche als Zusatzwärmeerzeuger umfaßt.

35. Vorrichtung nach einem der Ansprüche 30 bis 34, **dadurch gekennzeichnet**, daß das Verschlußteil (14') einen in den Formraum (6) zwischen Formmantel (4) und Formkern (3) von oben einsetzbaren, den Formraum (6) unterseitig begrenzenden Trennkörper (60) umfaßt.

36. Vorrichtung nach Anspruch 35, **dadurch gekennzeichnet**, daß der Trennkörper (60) als Ringteil ausgebildet ist, das zumindest ein benachbartes Ende (61) eines Formkörpers (R) zu einem Spitzende oder dgl. Enden formt.

37. Vorrichtung nach Anspruch 35 oder 36, **dadurch gekennzeichnet**, daß der Trennkörper (60) innen- und außenseitig mit einer umlaufenden Einziehung (64; 65) für den Eingriff von Folientrenngliedern versehen ist.

38. Vorrichtung nach einem der Ansprüche 35 bis 37, **dadurch gekennzeichnet**, daß der Trennkörper (60) nach außen offene Haltetaschen (66) für einen radialen Eingriff von Zwischenstützgliedern (67) aufweist.

39. Vorrichtung nach einem der Ansprüche 35 bis 38, **dadurch gekennzeichnet**, daß der Trennkörper (60) in vertikaler Richtung in mehrere Segmente (70) unterteilt ist.

40. Vorrichtung nach einem der Ansprüche 35 bis 39, **dadurch gekennzeichnet**, daß der Trennkörper (60) aus Kunststoff besteht, im Bereich der Ober- und der Unterseite mit Entlüftungsöffnungen versehen ist und entlang zumindest einzelner Außenrandkanten Dichtlippen aufweist.

41. Vorrichtung nach einem der Ansprüche 35 bis 40, **dadurch gekennzeichnet**, daß unterhalb des Formmantels (4) und des Formkerns (3) eine Folientrennvorrichtung (75) mit einem inneren und einem äußeren Trennwerkzeug (76, 77) vorgesehen ist, durch die der innere und der äußere Folienvorhang (33,34) in einer gemeinsamen horizontalen Ebene durchtrennbar sind.

42. Vorrichtung nach Anspruch 40, **dadurch gekennzeichnet**, daß jedes Trennwerkzeug (76, 77) eine Anzahl von radial gerichteten Schneidmessern (78) umfaßt, die mittels eines Antriebs (79) aus einer Neutralstellung in eine Betriebsstellung bewegbar und in der Betriebsstellung alternierend um die Längsmittelachse (2) der Formvorrichtung (1) verschwenkbar sind.

43. Vorrichtung nach Anspruch 41 oder 42, **dadurch gekennzeichnet**, daß das innere Trennwerkzeug (76) an der Unterseite des Formkerns (3) befestigt ist.

44. Vorrichtung nach einem der Ansprüche 41 bis 43, **dadurch gekennzeichnet**, daß das äußere Trennwerkzeug (77) an einem an der Unterseite des Formmantels (4) aufgehängten Außentragring (86) abgestützt ist.

45. Vorrichtung nach einem der Ansprüche 39 bis 44, **dadurch gekennzeichnet**, daß die Zwischenhalteglieder (67) für den Trennkörper (60) mittels eines Antriebs (89) aus einer Neutralstellung radial einwärts in Eingriff mit den Haltetaschen (66) des Trennkörpes (60) bewegbar und mitsamt ihren Antrieben an dem Außentragring abgestützt sind.

46. Vorrichtung nach Anspruch 44, **dadurch gekennzeichnet**, daß der Außentragring (86) an Führungen (87) parallel zur Längsmittelachse (2) der Formvorrichtung (1) verschieblich abgestützt und mittels eines Antriebs (88) zwischen einer oberen Endstellung und einer unteren Endstellung bewegbar ist.

47. Vorrichtung nach einem der Ansprüche 35 bis 46, **dadurch gekennzeichnet**, daß die Trägerplatte (15) an ihrer Oberseite Fixierbacken (90) trägt, die mittels eines Antriebs (91) aus einer Neutralstellung radial einwärts in Eingriff mit dem unteren Ende eines auf der Trägerplatte (15) abgestützten Formkörpers (R) bewegbar sind.

48. Vorrichtung nach einem der Ansprüche 13 bis 47, **dadurch gekennzeichnet**, daß eine Austragvorrichtung (92) für fertige Formkörper (R) vorgesehen ist, die einen auf der in unterer Endstellung befindlichen Trägerplatte (15) abgestützten, fertigen Formkörper (R) außenseitig erfassende Greifer umfaßt, die an einem horizontal bewegbaren Gestell (96) angeordnet sind.

49. Vorrichtung nach Anspruch 48, **dadurch gekennzeichnet**, daß zwei in Greifausgangsstellung einander diametral zum Formkörper (R) gegenüberliegende Gruppen von übereinander angeordneten Sauggreifern (93, 94) vorgesehen sind, die jeweils mittels eines Antriebs (95) aus einer Neutralstellung radial einwärts in Anlage am Formkörper (R) beweg- und mittels Unterdruck beaufschlagbar sind.

50. Vorrichtung nach Anspruch 48 oder 49, **dadurch gekennzeichnet**, daß das Gestell (96) der Austragvorrichtung (92) entlang von Horizontalführungen (97) aus einer Übernahmestellung in eine Abgabestellung seitlich neben der Formvorrichtung (1) bewegbar ist.

## Claims

1. A method of producing pipes or pipelike moulded bodies (M;R) from polymer concrete, in which mineral casting composition is introduced into the moulding space (6) of a moulding apparatus (1) of which the longitudinal central axis (2) is vertically aligned and which comprises a mould core (3) and surrounding and spaced apart from this latter a mantle (4), is riddled and then subjected to a hardening process accompanied by the supply of heat, characterised in that
- at the commencement of a production process during or after filling of part of the mould space (6) with mineral casting composition, riddling of the mineral casting composition in the mould space (6) is commenced,
- with the growth of the column of mineral casting composition along the longitudinal central axis (2) of the moulding apparatus (1) towards the top end of the mould space (6) and after commencement of the process of riddling the mineral casting composition, heat is supplied in a heating zone (48) which follows on from or is concordant with the riddling zone (50, 51, 52),
- and in that after commencement of the hardening process in the mineral casting composition, in the bottom part of the mould space (6), the column of material in the mould space as a whole shifts downwards and its part which is in course of hardening through is discharged from the mould space (6) and
- the column of material is made up by continuous or intermittent addition of mineral casting composition into the mould space (6) and the topped up mineral casting composition is fed through the riddling and the heating zone (50, 51, 52, 48).

2. A method according to Claim 1, characterised in that after attainment of an upper desired height in the mould space (6), the supply of mineral casting composition is maintained substantially constant until the end of production of a moulded body (M;R).

3. A method according to Claim 1 or 2, characterised in that at the commencement of a production process, initially a bottom part of the mould space (6) is filled with mineral casting composition.

4. A method according to one of Claims 1 to 3, characterised in that the riddling and the heating zone (50, 51, 52, 48) are associated with axially superposed portions of the mould core (3) and at the time of or after initial filling of the mould space (6) with mineral casting composition, they are by upwards movement of the mould core (3) in relation to the mantle (4) moved out of a lower starting position in which the bottom end of the riddling zone (50,51, 52) is adjacent the bottom end of the mould space (6), into an upper extreme position which constitutes the main operating position and in which the upper end of the riddling zone is adjacent the upper end of the mould space.

5. A method according to one of Claims 1 to 4, characterised in that the riddling and/or the heating zone (50, 51, 52; 48) extend substantially above the height of the mould space (6) and are optionally activated and deactivated in superposed partial areas.

6. A method according to one of Claims 1 to 5, characterised in that the column of material has its bottom end supported on a closure part (14; 14') which bounds the bottom end of the mould space (6) and, after initiation of the hardening process in the part of the mineral casting composition which is adjacent the closure part, is, together with the closure part (14; 14'), lowered parallel with the longitudinal central axis (2) of the mould space (6) continuously or in a plurality of stages over a total distance which corresponds substantially to the desired length of the moulded body (M;R) to be produced.

7. A method according to Claim 1 or 2, characterised in that at the commencement of a production process, firstly an upper part of the mould space (6) bounded by a closure part (14') in the annular space between mantle (4) and mould core (3) is filled with mineral casting composition which is riddled in this part of the mould space (6) and after attainment of the upper desired height, the column of mineral casting composition is progressively lowered into the lower part of the mould space (6) where it is heated and, after initiation of the hardening process in the part of the mineral casting composition which is adjacent the closure part (14'), the column of material together with the closure part (14') is lowered parallel with the longitudinal central axis (2) of the mould space (6) continuously or in a plurality of stages over a total distance which corresponds substantially to the desired length of the moulded body (15) which is to be produced.

8. A method according to one of Claims 1 to 7, characterised in that during the supply of mineral casting composition to the mould space (6), this latter is alternatingly pivoted about the longitudinal central axis (2) of the moulding apparatus (1).

9. A method according to one of Claims 1 to 8, characterised in that the mineral casting composition is, in the heating zone (48), heated exclusively or additionally by exposure to electromagnetic microwaves.

10. A method according to one of Claims 1 to 9, characterised in that the mineral casting composition in the mould space (6) is kept separate from the mould core (3) and mantle (4) on the inside and outside by a separating agent.

11. A method according to Claim 10, characterised in that sheets (33, 34) of film which overlap and supplement one another to form a tubular curtain are used as the separating agent.

12. A method according to one of Claims 1 to 11, characterised in that a mineral casting composition is used which, by the addition of a hardening agent, offers for the hardening process a triggering temperature situated in a range from about 50 to 90° and in particular from 60 to 70° and to which a hardening accelerator is added.

13. An apparatus for producing tubes or tube-like moulded bodies (15) from polymer concrete, with a moulding apparatus (1) with a vertical longitudinal central axis (2) and which comprises a mould core (3) and a mantle (4) with a mould space (6) between them as well as a filling apparatus (5) for feeding mineral casting composition into the mould space (6) from above, a riddling apparatus (55) and a heating apparatus (46, 47), characterised in that
- the mantle (4) comprises a stationary part (7) with an axial length which corresponds to a fraction of the length of a moulded body (15) which is to be produced,
- the mould core (3) presents different treatment zones which include heating (48) and riddling zones (50, 51, 52),
- the treatment-active areas of the treatment zones (48; 50, 51, 52) are adapted for axial displacement and
- there is at the bottom end of the mould space (6) a closure part (14; 14') which can be lowered out of an upper starting position parallel with the longitudinal central axis (2) into an extreme low position over a distance which corresponds substantially to the desired length of a moulded body (M;R) which is to be produced.

14. An apparatus according to Claim 13, characterised in that the treatment zones are disposed in axially bounded length portions and in that for displacement of treatment zones in relation to the mould shell (4), the mould core (3) can be moved axially out of a bottom starting position into an upper extreme position.

15. An apparatus according to Claim 13 or 14, characterised in that for the displacement of treatment zones in relation to the mantle (4), the treatment zones are adapted to be axially displaced or expanded.

16. An apparatus according to one of Claims 13 to 15, characterised in that the parts (3, 4, 14) of the moulding apparatus (1) which bound the mould space (6) are mounted to be pivotable alternatingly about the longitudinal central axis (2) and in that the outlet (26) from the filling apparatus (5) opens out rigidly in the area above the mould space (6).

17. An apparatus according to one of Claims 13 to 16, characterised in that the mantle (4) is, in a plane at right-angles to the longitudinal central axis (2), divided into two parts (7, 9) of which the lower part (9) is, in an axially extending plane, divided into two half parts (10, 11) adapted for movement along guides in opposite directions and horizontally out of a closed operating position into an opened mould-removal position.

18. An apparatus according to Claim 16, characterised in that the bottom part (9) of the mantle (4) forms a sleeve-type outer mould part.

19. An apparatus according to one of Claims 13 to 18, characterised in that the closure part (14) comprises a carrier plate (15) adapted for vertical upwards and downwards movement.

20. An apparatus according to Claim 19, characterized in that the closure part (14) comprises a sleeve-like inner mould part (16) supported on the carrier plate (15).

21. An apparatus according to one of Claims 17 to 20, characterized in that the bottom part (9) of the mantle (4) is supported on the carrier plate (15), with which it can be lowered out of its upper starting position into its extreme low position.

22. An apparatus according to one of Claims 17 to 21, characterized in that the half parts (10, 11) of the bottom part (9) can in the extreme low position of the closure part (14) be moved into the mould removal position in which, together with the closure part (14), they can be raised upwards into an intermediate position at the height of their operating position and then moved horizontally in the opposite direction into the operating position.

23. An apparatus according to one of Claims 13 to 19, characterised in that the carrier plate (15) of the closure part (14) is supported on a lifting table (23) displaceable along vertical guides and, by means of a mounting device (28), can pivot about the longitudinal central axis (2) of the moulding apparatus (1).

24. An apparatus according to one of Claims 13 to 23, characterised in that by means of a mounting device (26), the upper part (7) of the mantle (4) is supported on a carrier (27) and is able to pivot about the longitudinal central axis (2) of the moulding apparatus (1).

25. An apparatus according to one of Claims 13 to 24, characterised in that the mould core (3) is vertically displaceable along a central guide member (29) and in that the central guide member (29) is in the region of its upper end supported by a mounting device (30) to pivot about the longitudinal central axis (2).

26. An apparatus according to one of Claims 13 to 25, characterised in that the mould core (3), the mantle (4) and the closure part (14) can be pivoted alternatingly and in synchronism by means of drive devices (3a; 7a; 9a).

27. An apparatus according to Claim 26, characterised in that the pivoting angle amounts to about 300°.

28. An apparatus according to one of Claims 13 to 27, characterised in that associated with the mould core (3) and the upper part (7) of the mantle (4) are groups of supply rolls (31; 32) for sheets of film which constitute film curtains (33; 34) which line the inside and outside of the mould space (6).

29. An apparatus according to Claim 28, characterised in that the supply rolls (31) associated with the mould core (3) are mounted on a carrier frame (35) supported on a central guide member (29) for the mould core (3).

30. An apparatus according to Claim 28 or 29, characterised in that the supply rolls (32) associated with the upper part (7) of the mantle (4) are mounted on a carrier frame (36) supported on the upper part (7).

31. An apparatus according to one of Claims 28 to 30, characterised in that in the region of the bottom edge of the inner wall (8) of the upper part (7) of the mantle (4), of the upper edge of the inner wall of the bottom part (9) of the mantle (4), of the bottom edge of the outer wall of the mould core (3) and, facing the mould core (3), the rear wall of the sleeve-like inner mould part (16) of the closure part (14) there are annular areas (37, 38, 39, 40) for adhesive fixing of the films.

32. An apparatus according to one of Claims 28 to 31, characterised by a device (43) for parting the film curtains (33, 34) in a plane crosswise to the longitudinal central axis (2) of the moulding apparatus and at a predetermined distance below the underside of the upper part (7) of the mould space (4) and above the upper end of a finished moulded body.

33. An apparatus according to one of Claims 13 to 32, characterised in that the sleeve-like inner mould part (16) of the closure part (4) consists of a number of mould segments (45) disposed concentrically of the longitudinal central axis (2) and which are supported for limited radial displacement and which can be displaced radially between an operating and a mould removal position by means of a drive (16a).

34. An apparatus according to one of Claims 13 to 33, characterised in that the mantle (4) and/or the mould core (3) comprise a heating zone constituted by microwave generators (47) or such as the means of auxiliary heat generation.

35. An apparatus according to one of Claims 30 to 34, characterised in that the closure part (14') comprises a separating member (60) which can be inserted from above into the mould space (6) between mantle (4) and mould core (3) and which bounds the underside of the mould space (6).

36. An apparatus according to Claim 35, characterised in that the separating member (60) is constructed as an annular part which forms at least an adjacent end (61) of a moulded body (R) to a pointed end or like ends.

37. An apparatus according to Claim 35 or 36, characterised in that the separating member (60) is on the inside and outside provided with an encircling restriction (64; 65) for the engagement of film separating members.

38. An apparatus according to one of Claims 35 to 37, characterised in that the separating member (60) comprises outwardly open retaining pockets (66) for a radial engagement of intermediate supporting members (67).

39. An apparatus according to one of Claims 35 to 38, characterised in that the separating member (60) is in a vertical direction subdivided into a plurality of segments (70).

40. An apparatus according to one of Claims 35 to 39, characterised in that the separating member (60) consists of a synthetic plastics material, is in the region of the upper and undersides provided with vent orifices and comprises sealing lips along at least individual outer marginal edges.

41. An apparatus according to one of Claims 35 to 40, characterised in that beneath the mantle (4) and the mould core (3) there is a film parting device (75) with an inner and an outer parting tool (76, 77) by which the inner and the outer film curtain (33, 34) can be parted through in a common horizontal plane.

42. An apparatus according to Claim 40, characterised in that each parting tool (76, 77) comprises a number of radially directed cutter blades (78) which can be moved by a drive (79) out of a neutral position into an operating position and which, in the operating position can be alternatingly pivoted about the longitudinal central axis (2) of the moulding apparatus (1).

43. An apparatus according to Claim 41 or 42, characterised in that the inner parting tool (76) is fixed on the underside of the mould core (3).

44. An apparatus according to one of Claims 41 to 43, characterised in that the outer parting tool (77) is supported on an outer carrier ring (86) suspended on the underside of the mantle (4).

45. An apparatus according to one of Claims 39 to 44, characterised in that the intermediate retaining members (67) for the separating member (60) can be moved by a drive (89) out of a neutral position radially inwardly into engagement with the retaining pockets (66) of the separating member (60) and are supported on the outer carrier ring together with their drives.

46. An apparatus according to Claim 44, characterised in that the outer carrier ring (86) is supported for displacement on guides (87) parallel with the longitudinal central axis (2) of the moulding apparatus (1) and can be moved by a drive (88) between an extreme upper position and an extreme lower position.

47. An apparatus according to one of Claims 35 to 46, characterised in that the carrier plate (15) has on its upper side fixing jaws (90) which can by means of a drive (91) be moved radially inwardly out of a neutral position into engagement with the bottom end of a moulded body (R) supported on the carrier plate (15).

48. An apparatus according to one of Claims 13 to 47, characterised in that a device (92) for delivering completed moulded bodies (R) is provided which comprises, supported on the carrier plate (15) which is in its extreme lower position, grippers which take hold of the outside of the finished moulded body (R) and which are disposed on a horizontally movable frame (96).

49. An apparatus according to Claim 48, characterised in that there are provided two groups of superposed suction grippers (93, 94) which are disposed diametrically opposite the moulded body (R) in the initial gripping position and which, by means of a drive (95), can be moved out of a neutral position radially inwardly to bear on the moulded body (R) and which can be subjected to a negative pressure.

50. An apparatus according to Claim 48 or 49, characterised in that the frame (96) of the delivery device (92) can be moved along horizontal guides (97) out of a take-over position into a delivery position laterally alongside the moulding apparatus (1).

## Revendications

1. Procédé de fabrication de tuyaux ou d'éléments moulés tubulaires (M, R) en béton synthétique, dans lequel une masse minérale de moulage est introduite dans le volume de moulage (6) d'un dispositif de moulage (1) dont l'axe central longitudinal (2) est vertical, et qui comprend un noyau (3) et un surmoule (4) entourant le noyau à distance de celui-ci, est mise en vibration et est ensuite soumise à une opération de polymérisation par application de chaleur, caractérisé en ce que :
- au début d'une opération de fabrication, lors du remplissage ou après le remplissage d'une partie du volume de moulage (6) par la masse minérale de moulage, on commence par la mise en vibration de la masse minérale de moulage dans le volume de moulage (6),
- au fur et à mesure que la colonne de matériau constituée de la masse minérale de moulage s'accroît le long de l'axe central longitudinal (2) du dispositif de moulage (1), vers l'extrémité supérieure de l'espace de moulage (6), et après le début de l'opération de mise en vibration de la masse minérale de moulage, de la chaleur est fournie dans une zone de chauffage (48) suivant la zone de mise en vibration (50, 51, 52) ou coïncidant avec celle-ci,
- après le début de l'opération de polymérisation de la masse minérale de moulage dans la zone inférieure du volume de moulage (6), la colonne de matériau qui se trouve dans le volume de moulage est déplacée vers le bas dans son ensemble et sa zone se trouvant chaque fois en cours de polymérisation est extraite du volume de moulage (6), et
- la colonne de matériau est complétée par un appoint continu ou intermittent de masse minérale de moulage dans le volume de moulage (6) et la masse minérale de moulage complétée est acheminée à travers la zone de mise en vibration et de chauffage (50, 51, 52; 48).

2. Procédé selon la revendication 1, caractérisé en ce que l'alimentation de masse minérale de moulage, après avoir atteint un niveau nominal supérieur dans le volume de moulage (6) est maintenue sensiblement constante jusqu'à la fin de la fabrication d'un élément moulé (M; R),.

3. Procédé selon la revendication 1 ou 2, caractérisé en ce que, au début d'une opération de fabrication, on remplit tout d'abord une partie inférieure du volume de moulage (6) de masse minérale de moulage.

4. Procédé selon l'une quelconque des revendications 1 à 3, caractérisé en ce qu'à la zone de mise en vibration et de chauffage (50, 51, 52; 48) sont affectées des sections du noyau (3) disposées axialement l'une au dessus de l'autre et, lors du remplissage initial ou après le remplissage initial du volume de moulage (6) au moyen de masse minérale de moulage, par un déplacement vers le haut du noyau (3) par rapport au surmoule (4) à partir d'une position de départ inférieure, dans laquelle l'extrémité inférieure de la zone de mise en vibration (50, 51, 52) est voisine de l'extrémité inférieure du volume de moulage (6), lesdites sections sont amenées dans une position finale supérieure formant la position de fonctionnement principale, dans laquelle l'extrémité supérieure de la zone de mise en vibration est voisine de l'extrémité supérieure du volume de moulage.

5. Procédé selon l'une quelconque des revendications 1 à 4, caractérisé en ce que les zones de mise en vibration et/ou de chauffage (50, 51, 52; 48) s'étendent en substance sur la hauteur du volume de moulage (6) et sont activées et désactivées au choix dans des zones partielles agencées l'une au-dessus de l'autre.

6. Procédé selon l'une quelconque des revendications 1 à 5, caractérisé en ce que la colonne de matériau prend appui, par son extrémité inférieure, sur une partie de fermeture (14; 14') délimitant le volume de moulage (6) à son extrémité inférieure et est abaissée, conjointement avec la partie de fermeture (14; 14') après amorçage de l'opération de polymérisation dans la partie de la masse minérale de moulage voisine de la partie de fermeture parallèlement à l'axe central longitudinal (2) du volume de moulage (6), en continu ou en plusieurs étapes sur une longueur totale de déplacement qui correspond en substance à la longueur nominale de l'élément moulé (M; R) à fabriquer.

7. Procédé selon la revendication 1 ou 2, caractérisé en ce que, au début d'une opération de fabrication, on remplit tout d'abord de masse minérale de moulage une partie supérieure du volume de moulage (6) limitée en dessous par une partie de fermeture (14') dans l'espace annulaire entre le surmoule (4) et le noyau (3), la masse minérale de moulage est mise en vibration dans cette partie du volume de moulage (6) et, après avoir atteint la hauteur nominale supérieure, la colonne de matériau de masse minérale de moulage est descendue progressivement dans la partie inférieure du volume de moulage (6), y est chauffée et, après amorçage de l'opération de polymérisation dans la partie de la masse minérale de moulage voisine de la partie de fermeture (14'), la colonne de matériau est descendue, conjointement avec la partie de fermeture (14'), parallèlement à l'axe central longitudinal (2) du volume de moulage (6) en continu ou en plusieurs étapes, sur une longueur totale de trajet qui correspond en substance à la longueur nominale de l'élément moulé à fabriquer (15).

8. Procédé selon l'une quelconque des revendications 1 à 7, caractérisé en ce que, pendant l'alimentation de la masse minérale de moulage au volume de moulage (6), celui-ci est soumis à une rotation alternante autour de l'axe central longitudinal (2) du dispositif de moulage (1).

9. Procédé selon l'une quelconque des revendications 1 à 8, caractérisé en ce que la masse minérale de moulage est chauffée dans la zone de chauffage (48) exclusivement ou en supplément par application de micro-ondes électromagnétiques.

10. Procédé selon l'une quelconque des revendications 1 à 9, caractérisé en ce que la masse minérale de moulage dans le volume de moulage (6) est maintenue séparée à l'intérieur et à l'extérieur, par un moyen de séparation, du noyau (3) et du surmoule (4).

11. Procédé selon la revendication 10, caractérisé en ce qu'on utilise comme moyen de séparation des bandes de films (33, 34) qui se chevauchent l'une l'autre et qui se complètent pour former un rideau tubulaire.

12. Procédé selon l'une quelconque des revendications 1 à 11, caractérisé en ce qu'on utilise une masse minérale de moulage qui offre, par addition d'un agent de polymérisation, une température de déclenchement de l'opération de polymérisation, qui se situe dans une plage d'environ 50 à 90°C, en particulier de 60 à 70°C, et à laquelle un accélérateur de polymérisation est ajouté.

13. Dispositif de fabrication de tuyaux ou d'éléments moulés tubulaires (15) en béton synthétique, comportant un dispositif de moulage (1) à un axe central longitudinal vertical (2), qui comporte un noyau (3) et un surmoule (4) avec un volume de moulage (6) entre eux ainsi qu'un dispositif de remplissage (5) pour l'amenée de la masse minérale de moulage par le haut dans le volume de moulage (6), un dispositif de mise en vibration (55) et un dispositif de chauffage (46; 47), caractérisé en ce que :
- le surmoule (4) présente une partie fixe (7) d'une longueur axiale qui correspond à une fraction de la longueur d'un élément moulé à fabriquer (15),
- le noyau (3) présente différentes zones de traitement auxquelles appartiennent les zones de chauffage (48) et de mise en vibration (50, 51, 52),
- les régions actives au plan traitement des zones de traitement (48; 50, 51, 52) peuvent être déplacées axialement et
- à l'extrémité inférieure du volume de moulage (6) est prévue une partie de fermeture (14; 14'), qui peut être abaissée d'une position de départ supérieure, parallèlement à l'axe central longitudinal (2), vers une position finale inférieure d'un bout de trajet, qui correspond en substance à la longueur nominale d'un élément moulé à fabriquer (M; R).

14. Dispositif selon la revendication 13, caractérisé en ce que les zones de traitement sont agencées dans des sections de longueurs limitées axialement et, pour déplacer les zones de traitement par rapport au surmoule (4), le noyau (3) peut être déplacé axialement de sa position de départ inférieure vers sa position finale supérieure.

15. Dispositif selon la revendication 13 ou 14, caractérisé en ce que, pour déplacer les zones de traitement par rapport au surmoule (4), les zones de traitement peuvent être déplacées ou étendues axialement.

16. Dispositif selon l'une quelconque des revendications 13 à 15, caractérisé en ce que les parties (3, 4, 14) du dispositif de moulage (1) délimitant le volume de moulage (6) sont montées globalement à rotation alternante autour de l'axe central longitudinal (2) et la sortie du dispositif de remplissage (5) s'ouvre en position fixe dans la zone située au-dessus du volume de moulage (6).

17. Dispositif selon l'une quelconque des revendications 13 à 16, caractérisé en ce que le surmoule (4) est subdivisé, dans un plan s'étendant perpendiculairement à l'axe central longitudinal (2), en deux parties (7, 9) dont la partie inférieure (9) est subdivisée, dans un plan s'étendant axialement, en deux demi-parties (10, 11), qui peuvent être déplacées le long de guides horizontalement en sens opposés, entre une position de fonctionnement fermée et une position de démoulage ouverte.

18. Dispositif selon la revendication 16, caractérisé en ce que la partie inférieure (9) du surmoule (4) forme une partie de moulage externe de tubulure d'emboîtement.

19. Dispositif selon l'une quelconque des revendications 13 à 18, caractérisé en ce que la partie de fermeture (14) présente une plaque de support (15) qui peut se déplacer verticalement vers le haut et vers le bas.

20. Dispositif selon la revendication 19, caractérisé en ce que la partie de fermeture (14) comprend une partie (16) de moulage interne de tubulure d'emboîtement qui s'appuie sur la plaque de support (15).

21. Dispositif selon l'une quelconque des revendications 17 à 20, caractérisé en ce que la partie inférieure (9) du surmoule (4) s'appuie sur la plaque de support (15) et peut descendre avec celle-ci de sa position de départ supérieure à sa position finale inférieure.

22. Dispositif selon l'une quelconque des revendications 17 à 21, caractérisé en ce que les moitiés (10-11) de la partie inférieure (9) peuvent être transférées de la position finale inférieure de la partie de fermeture (14) dans leur position de démoulage et peuvent, dans celle-ci, conjointement avec la partie de fermeture (14), être élevées dans une position intermédiaire au niveau de leur position de fonctionnement et être déplacées ensuite horizontalement en sens opposé dans la position de fonctionnement.

23. Dispositif selon l'une quelconque des revendications 13 à 19, caractérisé en ce que la plaque de support (15) de la partie de fermeture (14) peut être montée à pivotement sur un plateau élévateur (23) qui peut se déplacer le long de guides verticaux, au moyen d'un dispositif à roulement (28), autour de l'axe central longitudinal (2) du dispositif de moulage (1).

24. Dispositif selon l'une quelconque des revendications 13 à 23, caractérisé en ce que la partie supérieure (7) du surmoule (4) est supportée sur un support (27) à rotation, au moyen d'un dispositif à roulement (26), autour de l'axe central longitudinal (2) du dispositif de moulage (1).

25. Dispositif selon l'une quelconque des revendications 13 à 24, caractérisé en ce que le noyau (3) peut être déplacé verticalement le long d'un élément de guidage central (29) et l'élément de guidage central (29) est supporté à rotation autour de l'axe central longitudinal (2) dans la zone de son extrémité supérieure, par un dispositif à roulement (30).

26. Dispositif selon l'une quelconque des revendications 13 à 25, caractérisé en ce que le noyau (3), le surmoule (4) et la partie de fermeture (14) peuvent être soumis à un mouvement de rotation alternant et synchrone par des dispositifs d'entraînement (3a; 7a; 9a).

27. Dispositif selon la revendication 26, caractérisé en ce que l'angle de rotation est d'environ 300°.

28. Dispositif selon l'une quelconque des revendications 13 à 27, caractérisé en ce qu'on affecte au noyau (3) et à la partie supérieure (7) du surmoule (4) des groupes de rouleaux d'alimentation (31; 32) pour des bandes de films, qui forment des rideaux de films (33; 34) garnissant l'extérieur et l'intérieur du volume de moulage (6).

29. Dispositif selon la revendication 28, caractérisé en ce que les rouleaux d'alimentation (31) affectés au noyau (3) sont montés sur un châssis de support (35) prenant appui sur l'élément de guidage central (29) pour le noyau (3).

30. Dispositif selon la revendication 28 ou 29, caractérisé en ce que les rouleaux d'alimentation (32) affectés à la partie supérieure (7) du surmoule (4) sont montés sur un châssis de support (36) prenant appui sur la partie supérieure (7).

31. Dispositif selon l'une quelconque des revendications 28 à 30, caractérisé en ce que dans la zone du bord inférieur de la paroi interne (8) de la partie supérieure (7) du surmoule (4), du bord supérieur de la paroi interne de la partie inférieure (9) du surmoule (4), du bord inférieur de la paroi externe du noyau (3) et de la paroi arrière, opposée au noyau (3), de la partie (16) de moulage interne de tubulure d'emboîtement de la partie de fermeture (14) sont prévues des zones d'aspiration annulaires (37, 38, 39, 40) pour la fixation des films.

32. Dispositif selon l'une quelconque des revendications 28 à 31, caractérisé en ce qu'il est prévu un dispositif (43) pour sectionner les rideaux de films (33, 34) dans un plan transversal à l'axe central longitudinal (2) du dispositif de moulage (1) et à une distance prédéterminée en dessous de la face inférieure de la partie supérieure (7) du volume de moulage (4) et au-dessus de l'extrémité supérieure d'un élément moulé fini.

33. Dispositif selon l'une quelconque des revendications 13 à 32, caractérisé en ce que la partie (16) de moulage interne de tubulure d'emboîtement de la partie de fermeture (14) est constituée d'un certain nombre de segments de moule (45) agencés concentriquement vis-à-vis de l'axe central longitudinal (2), montés de manière à pouvoir se déplacer radialement de manière limitée et déplaçables radialement, au moyen d'un dispositif d'entraînement (16a), entre une position d'exploitation et une position de démoulage.

34. Dispositif selon l'une quelconque des revendications 13 à 33, caractérisé en ce que le surmoule (4) et/ou le noyau (3) présentent une zone de chauffage qui est formée de générateurs de micro-ondes (47) ou qui comprend ceux-ci comme producteurs de chaleur complémentaires.

35. Dispositif selon l'une quelconque des revendications 30 à 34, caractérisé en ce que la partie de fermeture (14') comprend un corps de séparation (60) qui peut être introduit par le haut dans le volume de moulage (6), entre le surmoule (4) et le noyau (3) et qui limite le volume de moulage (6) vers le bas.

36. Dispositif selon la revendication 35, caractérisé en ce que le corps de séparation (60) se présente sous la forme d'une partie annulaire, qui forme au moins une extrémité voisine (61) d'un élément moulé (R) en un bout mâle ou en extrémités analogues.

37. Dispositif selon la revendication 35 ou 36, caractérisé en ce que le corps de séparation (60) est pourvu, côté interne et côté externe, d'une contracture périphérique (64; 65) dans laquelle s'engagent les éléments de sectionnement des films.

38. Dispositif selon l'une quelconque des revendications 35 à 37, caractérisé en ce que le corps de séparation (60) présente des logements de retenue (66) ouverts vers l'extérieur pour un engagement radial d'éléments d'appui intermédiaires (67).

39. Dispositif selon l'une quelconque des revendications 35 à 38, caractérisé en ce que le corps de séparation (60) est subdivisé dans la direction verticale en plusieurs segments (70).

40. Dispositif selon l'une quelconque des revendications 35 à 39, caractérisé en ce que le corps de séparation (60) est en matière plastique, est pourvu dans la zone du côté supérieur et du côté inférieur d'ouvertures de purge d'air et présente des lèvres d'étanchéité le long d'au moins certains bords externes.

41. Dispositif selon l'une quelconque des revendications 35 à 40, caractérisé en ce qu'en dessous du surmoule (4) et du noyau (3), est prévu un dispositif de sectionnement de films (75) comportant un outil de sectionnement interne et un outil de sectionnement externe (76, 77), par lesquels le rideau de film interne et le rideau de film externe (33, 34) peuvent être sectionnés dans un plan horizontal commun.

42. Dispositif selon la revendication 40, caractérisé en ce que chaque outil de sectionnement (76, 77) comprend un certain nombre de couteaux (78) dirigés radialement, qui peuvent être déplacés au moyen d'un dispositif d'entraînement (79) d'une position neutre à une position de travail et qui, en position de travail peuvent effectuer un mouvement de pivotement alterné autour de l'axe central longitudinal (2) du dispositif de moulage (1).

43. Dispositif selon la revendication 41 ou 42, caractérisé en ce que l'outil de sectionnement interne (76) est fixé à la face inférieure du noyau (3).

44. Dispositif selon l'une quelconque des revendications 41 à 43, caractérisé en ce que l'outil de sectionnement externe (77) prend appui sur un anneau de support externe (86) suspendu à la face inférieure du surmoule (4).

45. Dispositif selon l'une quelconque des revendications 39 à 44, caractérisé en ce que les éléments d'appui intermédiaires (67) pour le corps de séparation (60) peuvent être déplacés radialement vers l'intérieur, au moyen d'un dispositif d'entraînement (89), d'une position neutre en engagement avec les logements de retenue (66) du corps de séparation (60) et prenant appui sur l'anneau de support externe conjointement avec leurs dispositifs d'entraînement.

46. Dispositif selon la revendication 44, caractérisé en ce que l'anneau de support externe (86) s'appuie sur des guides (87) de manière à pouvoir se déplacer parallèlement à l'axe central longitudinal (2) du dispositif de moulage (1) et peut être déplacé au moyen d'un dispositif d'entraînement (88) entre une position finale supérieure et une position finale inférieure.

47. Dispositif selon l'une quelconque des revendications 35 à 46, caractérisé en ce que la plaque de support (15) porte sur sa face supérieure des mors de fixation (90) qui peuvent être déplacés radialement vers l'intérieur, au moyen d'un dispositif d'entraînement (91), d'une position neutre en engagement avec l'extrémité inférieure d'un élément moulé (R) reposant sur la plaque de support (15).

48. Dispositif selon l'une quelconque des revendications 13 à 47, caractérisé en ce qu'il est prévu un dispositif d'extraction (92) pour les éléments moulés finis (R), qui comporte des pinces qui saisissent de l'extérieur l'élément moulé fini (R) reposant sur la plaque de support (15) qui se trouve dans sa position finale inférieure, les pinces étant montées sur dans un châssis (96) qui peut se déplacer horizontalement.

49. Dispositif selon la revendication 48, caractérisé en ce que deux groupes de pinces aspirantes (93, 94) agencées l'une au-dessus de l'autre, sont prévus, lesdits groupes étant disposés en regard l'un de l'autre diamétralement par rapport à l'élément moulé, en position de départ de préhension, lesdites pinces aspirantes pouvant être déplacées radialement vers l'intérieur, respectivement au moyen d'un dispositif d'entraînement (95) d'une position neutre en appui sur l'élément moulé (R) et pouvant être soumises à une dépression.

50. Dispositif selon la revendication 48 ou 49, caractérisé en ce que le châssis (96) du dispositif d'extraction (92) peut être déplacé le long de guides horizontaux (97) entre une position de prise en charge et une position de distribution latéralement à coté du dispositif de moulage (1).
